# EUROPÄISCHE PATENTSCHRIFT

(11) **EP 1 926 393 B1**
(45) Veröffentlichungstag und Bekanntmachung des Hinweises auf die Patenterteilung: **23.05.2012**
(21) Anmeldenummer: 06793400.0
(22) Anmeldetag: 11.09.2006
(51) Int. Cl.: A23K 1/00, A23K 1/165

(54) **PHYTASEHALTIGES ENZYMGRANULAT I**
ENZYME GRANULATE I CONTAINING PHYTASE
GRANULE ENZYMATIQUE I CONTENANT DE LA PHYTASE

(30) Priorität: 12.09.2005 DE 102005043323
(43) Veröffentlichungstag der Anmeldung: 04.06.2008
(73) Patentinhaber: BASF SE, 67056 Ludwigshafen (DE)
(72) Erfinder: LOHSCHEIDT, Markus, 69121 Heidelberg (DE); BETZ, Roland, 67150 Niederkirchen (DE); BRAUN, Jörg, 76879 Essingen (DE); PELLETIER, Wolf, 76879 Ottersheim (DE); ADER, Peter, 64646 Heppenheim (DE)
(74) Vertreter: Reitstötter - Kinzebach
(86) Internationale Anmeldenummer: PCT/EP2006/066218
(87) Internationale Veröffentlichungsnummer: WO 2007/031483

(56) Entgegenhaltungen:
- WO-A-02/24926
- WO-A-98/28409
- WO-A-03/059086
- WO-A-2005/074707
- DE-A1- 19 859 385
- DE-A1- 19 922 753
- US-B1- 6 610 519

## Beschreibung

Die vorliegende Erfindung betrifft neue phytasehaltige Enzymgranulate, die als Futtermittelzusätze geeignet sind, sowie ein Verfahren zu ihrer Herstellung. Die Erfindung betrifft auch die Verwendung der phytasehaltigen Enzymgranulate in Futtermittelzusammensetzungen und insbesondere pelletierten Futtermittelzusammensetzungen, welche unter Verwendung der phytasehaltigen Enzymgranulate erhältlich sind.

Es ist allgemein üblich, dem Tierfutter Phytase zuzugeben, um eine bessere Futterverwertung, eine bessere Produktqualität oder eine geringere Belastung der Umwelt zu gewährleisten. Außerdem ist es gängige Praxis, Tierfutter in pelletierter Form zu verfüttern, da eine Pelletierung nicht nur die Futteraufnahme erleichtert, sondern auch die Handhabung des Futters verbessert. Darüber hinaus hat sich gezeigt, dass im Falle pelletierten Futters bestimmte Futterbestandteile besser verdaut werden und dem Futter zugesetzte Inhaltsstoffe, wie z. B. Vitamine, Enzyme, Spurenelemente, in der Futtermischung besser eingeschlossen werden können.

Zur Senkung der Keimbelastung (Hygienisierung) solcher Tierfutter wird häufig eine Hitzebehandlung durchgeführt. Eine Hitzebehandlung erfolgt auch im Rahmen des für die Pelletierung erforderlichen Konditionierens, bei dem das Futter mit Dampf versetzt und dadurch erhitzt und befeuchtet wird. Beim eigentlichen Pelletierschritt wird das Futter durch eine Matrize gepresst. Andere in der Futtermittelindustrie zum Einsatz kommende Prozesse sind das Extrudieren und Expandieren. Die Hitzeeinwirkung bei all diesen Prozessen stellt ein Problem dar, da die in solchen Futtermischungen enthaltenen Enzyme wie Phytase in der Regel thermisch instabil sind. Es wurden daher verschiedene Anstrengungen unternommen, die thermische Stabilität und insbesondere die Pelletierstabilität enzymhaltiger Futtermittelzusammensetzungen zu verbessern.

Verschiedentlich wurde vorgeschlagen, die Pelletierstabilität von phytasehaltigen Enzymgranulaten durch eine Beschichtung eines unbeschichteten enzymhaltigen Granulats zu verbessern.

Die WO 2000/47060 beschreibt beispielsweise phytasehaltige Enzymgranulate, die als Futtermittelzusätze geeignet sind und die eine Polyethylenglykolbeschichtung aufweisen.

Die WO 01/00042 lehrt ein Verfahren zur Beschichtung von phytasehaltigen Enzymgranulaten mit Polymeren. Als Beschichtungsmittel werden wässrige Lösungen von Polyalkylenoxid-Polymeren, von Homo- und Copolymeren des Vinylpyrrolidons, von Polyvinylalkoholen und von Hydroxypropylmethylcellulose sowie wässrige Dispersionen von Alkyl(meth)acrylat-Polymeren und Polyvinylacetat-Dispersionen vorgeschlagen.

Die WO 03/059086 wiederum lehrt ein Verfahren zur Herstellung von phytasehaltigen Enzymgranulaten mit verbesserter Pelletierstabilität, bei dem man ein phytasehaltiges Rohgranulat mit einer wässrigen Dispersion einer hydrophoben Substanz beschichtet.

Durch die Beschichtung kann die Stabilität der Granulate gegenüber einer Verringerung der Phytaseaktivität grundsätzlich verbessert werden, jedoch sind die erreichten Stabilitäten nicht vollständig zufriedenstellend.

In der EP-A-0 257 996 wird vorgeschlagen, Enzyme für Futtermischungen dadurch zu stabilisieren, dass sie im Gemisch mit einem Träger, der einen Hauptanteil an Getreidemehl aufweist, pelletiert werden.

Die WO 98/54980 wiederum beschreibt enzymhaltige Granulate mit verbesserter Pelletierstabilität, welche durch Extrusion einer wässrigen Enzymlösung mit einem Träger auf Basis eines essbaren Kohlenhydrats und anschließendes Trocknen hergestellt werden. Eine Beschichtung des Granulats wird nicht beschrieben. Die Stabilität dieser Granulate ist nicht zufriedenstellend.

Aus der WO 2005/074705 wiederum ist bekannt, zur Verbesserung der Stabilität des Enzyms in flüssigen oder festen Enzymformulierungen diesen Gummi-Arabicum oder ein Pflanzenprotein zuzusetzen.

Die WO 2005/074707 lehrt feste oder flüssige Enzymformulierungen, die wenigstens eine Phosphatase, ein Stabilisierungsmittel und ein tierisches Protein umfassen. Sofern es sich um eine feste Formulierung handelt, kann diese zu Granulaten extrudiert werden. Diese Granulate können beschichtet ein.

Die DE 199 22 753 lehrt Enzym-Instantformulierungen in Form von Agglomeraten, die mit einer wasserlöslichen Beschichtung versehen sein können.

Die DE 198 59 385 lehrt für die Tierernährung geeignete enzymhaltige Granulate.

Die US 6,610,519 offenbart Phytasegranulate, die unter Zusatz von Maisquellwasser hergestellt werden. Die enthaltene Milchsäure dient zur Stabilisierung des Enzyms. Die Granulate können mit hydrophoben Substanzen beschichtet werden.

Es ist deshalb Aufgabe der vorliegenden Erfindung phytasehaltige Enzymgranulate mit verbesserter Enzymstabilität, insbesondere Pelletierstabilität bereitzustellen. Die Enzymgranulate sollten zudem in einfacher Weise und kostengünstig herstellbar sein. Zudem sollte es bereits bei der Herstellung nicht zu Verlusten an Enzymaktivität kommen.

Es wurde überraschenderweise festgestellt, dass phytasehaltige Enzymgranulate besonders dann gute Pelletierstabilität aufweisen, wenn es sich um beschichtete Granulate handelt, dessen Teilchen neben wenigstens einer Beschichtung einen phytasehaltigen Kern umfassen, der ein festes, für Futtermittel geeignetes Trägermaterial umfasst und die Kerne der Teilchen oder das gesamte Teilchen nach ggf. erforderlicher Zermahlung beim Suspendieren oder Lösen in voll entsalztem Wasser bei 25°C einen pH-Wert im Bereich von 4,5 bis 6,5, bevorzugt im Bereich von 4,6 bis 6,0 und besonders bevorzugt von 4,7 bis 5,5 ergeben.

Dementsprechend betrifft die Erfindung ein phytasehaltiges Enzymgranulat für Futtermittel, dessen Teilchen
A) einen Kern, welcher wenigstens eine Phytase und wenigstens ein für Futtermittel geeignetes festes Trägermaterial umfasst, und
b) eine auf dem Kern angeordnete Beschichtung aufweisen, die zu wenigstens 90 Gew.-% aus in Wasser unlöslichen hydrophoben Substanzen besteht, wobei der Anteil an Kohlenstoff und Wasserstoff wenigstens 80 Gew.-% der hydrophoben Substanzen ausmacht,
wobei die Kerne der Teilchen oder das gesamte Teilchen nach ggf. erforderlicher Zermahlung beim Suspendieren oder Lösen in voll entsalztem Wasser bei 25°C einen pH-Wert im Bereich von 4,5 bis 6,5, bevorzugt im Bereich von 4,6 bis 6,0 und besonders bevorzugt von 4,7 bis 5,5 ergeben.

Die erfindungsgemäßen Enzymgranulate zeichnen sich durch eine besonders hohe Stabilität, insbesondere eine besonders hohe Pelletierstabilität aus und lassen sich in einfacher Weise herstellen, wobei der Verlust an Enzymaktivität während der Herstellung vergleichbar dem Verlust an Enzymaktivität bei vergleichbaren Verfahren des Standes der Technik ist. Dementsprechend betrifft die vorliegende Erfindung auch das hier beschriebene Herstellungsverfahren und die Verwendung der erfindungsgemäßen Enzymgranulate in Futtermittelzusammensetzungen, speziell in pelletierten Futtermittelzusammensetzungen.

Die phytasehaltigen Granulatteilchen der erfindungsgemäßen Enzymgranulate weisen einen Kern und wenigstens eine auf der Oberfläche des Kerns angeordnete hydrophobe Beschichtung auf, wobei der Kern wenigstens eine Phytase und wenigstens ein für Futtermittel geeignetes festes Trägermaterial umfasst.

Erfindungsgemäß ergeben die Kerne der Teilchen oder das gesamte Teilchen, gegebenenfalls nach Zermahlung, beim Suspendieren oder Lösen in voll entsalztem Wasser bei 25°C einen pH-Wert im Bereich von 4,5 bis 6,5, bevorzugt im Bereich von 4,6 bis 6,0 und besonders bevorzugt im Bereich von 4,7 bis 5,5. In der Regel wird man zur Bestimmung des pH-Wertes 5 g der unbeschichteten Kerne oder beschichteten Kerne bei 25°C in 200 ml entionisiertem Wasser lösen und den sich nach 30 min. einstellenden pH-Wert mit einer Glaselektrode bzw. mit einem pH-Wert-Messgerät bestimmen.

Gemäß einer bevorzugten Ausführungsform der Erfindung umfassen die den Kern bildenden Substanzen neben der Phytase und dem festen Trägermaterial wenigstens ein Mittel zur Einstellung eines pH-Wertes von 4,5 bis 6,5, bevorzugt 4,6 bis 6,0 und besonders bevorzugt von 4,7 bis 5,5, beispielsweise einen Puffer oder eine Base, letztere insbesondere dann, wenn die den Kern bildenden Materialien ihrerseits Säuregruppen aufweisen.

Geeignete Substanzen zur Einstellung des pH-Wertes sind dem Fachmann hinlänglich bekannt, beispielsweise aus Küster-Thiel, Rechentafeln für die chemische Analytik, 102. Auflage, 1982, Walter deGruyter-Verlag und Handbook of Chemistry and Physics, 76 th ed. 1995-1996, CRS Press 8-38 ff.; DIN Normenheft 22, Richtlinien für die pH-Messung in industriellen Anlagen, Berlin: Beuth 1974; DIN 19266 (Aug. 1979); DIN 19267 (Aug. 1978); Naturwissenschaften 65, 438f. (1978). Kontakte (Merck) 1981, Nr.1,37-43.

Beispiele für geeignete Puffer sind Acetat, Propionat, Tartrat, Hydrogencarbonat, Phthalat, Hydrogenphthalat, insbesondere die Natrium-, Kalium- oder Calciumsalze der vorgenannten Substanzen, einschließlich deren Hydrate oder Dihydrate, Phosphatpuffer, Kalium- oder Natriumphosphat, deren Hydrate oder Dihydrate, Natrium- oder Kaliumcarbonat. Beispiele für geeignete Basen sind Natrium- oder Kaliumcarbonat, Natrium-, Kalium-, Calcium-, Magnesium-, Ammoniumhydroxid bzw. Ammoniakwasser oder deren Oxide.

Die Menge an Puffer bzw. Base liegt typischerweise im Bereich von 0,1 bis 5 Gew.-%, bezogen auf das Gesamtgewicht der den Kern bildenden, nichtwässrigen Bestandteile. Grundsätzlich muss keine Zugabe des Puffers erfolgen, wenn die Bestandteile des Kernmaterials in der im Kern vorliegenden Zusammensetzung bereits einen solchen pH-Wert ergeben. Insbesondere hat sich ein Kernmaterial bewährt, das durch ein Verfahren erhältlich ist, bei dem man für die Herstellung des Kerns ein wässriges Enzymkonzentrat einsetzt, das bei 25°C einen pH-Wert im Bereich von 4,5 bis 6,5, bevorzugt 4,6 bis 6 und besonders bevorzugt von 4,7 bis 5,5 aufweist. Dabei wird der pH-Wert des Enzymkonzentrats direkt mit einer Glaselektrode bzw. mit einem pH-Wert-Messgerät bestimmt.

Weiterhin enthält das den Kern bildende Material erfindungsgemäß wenigstens ein festes, für Futtermittel geeignetes Trägermaterial. Das Trägermaterial macht typischerweise wenigstens 50 Gew.-%, insbesondere wenigstens 55 Gew.-% und häufig wenigstens 60 Gew.-% der nichtwässrigen Bestandteile des Kernmaterials, z.B. 50 bis 96,9 Gew.-%, vorzugsweise 55 bis 94,8 Gew.-% und insbesondere 60 bis 89,7 Gew.-%, bezogen auf die nichtwässrigen Bestandteile des Kerns.

Als futtermitteltaugliche Trägermaterialien können übliche inerte anorganische oder organische Träger verwendet werden. Ein "inerter" Träger darf keine negativen Wechselwirkungen mit dem (den) Enzym(en) des erfindungsgemäßen Futterzusatzes zeigen, wie z. B. eine irreversible. Inhibierung der Enzymaktivität bewirken, und muss für die Verwendung als Hilfsstoff in Futtermittelzusätzen unbedenklich sein. Als Beispiele für geeignete Trägermaterialien sind zu nennen: niedermolekulare organische Verbindungen sowie höhermolekulare organische Verbindungen natürlichen oder synthetischen Ursprungs sowie inerte anorganische Salze. Bevorzugt sind organische Trägermaterialien. Hierunter sind Kohlenhydrate besonders bevorzugt.

Beispiele für geeignete niedermolekulare organische Träger sind insbesondere Zucker, wie z. B. Glucose, Fructose, Saccharose. Als Beispiele für höhermolekulare organische Träger sind Kohlenhydratpoylmere zu nennen, insbesondere solche, die α-D-Glucopyranose, Amylose oder Amylopectin-Einheiten enthalten, insbesondere native und modifizierte Stärken, mikrokristalline Cellulose aber auch α-Glucane und β-Glucane, Pectin (einschließlich Protopectin) und Glycogen. Vorzugsweise umfasst das Trägermaterial wenigstens ein in Wasser unlösliches polymeres Kohlenhydrat, insbesondere ein natives Stärkematerial, wie insbesondere Maisstärke, Reisstärke, Weizenstärke, Kartoffelstärke, Stärken anderer pflanzlicher Quellen wie Stärke aus Tapioka, Cassava, Sago, Roggen, Hafer, Gerste, Süßkartoffel, Pfeilwurz und dergleichen, weiterhin Getreidemehle, wie z. B. Mais-, Weizen-, Roggen-, Gersten- und Hafermehl sowie Reismehl. Geeignet sind insbesondere auch Gemische der vorgenannten Trägermaterialien, insbesondere Gemische, die überwiegend, d.h. zu wenigstens 50 Gew.-%, bezogen auf das Trägermaterial, ein oder mehrere Stärkematerialien umfassen. Vorzugsweise macht dass wasserunlösliche Kohlenhydrat wenigstens 50 Gew.-%, insbesondere wenigstens 65 Gew.-% und speziell wenigstens 80 Gew.-% des Trägermaterials aus. Besonders bevorzugte Trägermaterialien sind Stärken, die nicht mehr als 5 Gew.-% und insbesondere nicht mehr als 2 Gew.-% Protein oder andere Bestandteile enthalten. Ein weiteres bevorzugtes Trägermaterial ist mikrokristalline Cellulose. Diese kann alleine oder in Mischung mit den zuvor genannten Trägermaterialen eingesetzt werden. Sofern die mikrokristalline Cellulose im Gemisch mit anderen Trägermaterialien eingesetzt wird, macht sie vorzugsweise nicht mehr als 50 Gew.-%, insbesondere nicht mehr als 30 Gew.-%, z.B. 1 bis 50 Gew.-%, insbesondere 1 bis 30 Gew.-% und speziell 1 bis 10 Gew.-%, des Trägermaterials aus.

Als anorganische Trägermaterialien kommen grundsätzlich alle für Futtermittel und Futtermittelzusätze bekannten anorganischen Trägermaterialien in Betracht, beispielsweise inerte anorganische Salze, z.B. Sulfate oder Carbonate der Alkali- und Erdalkalimetalle wie Natrium-, Magnesium-, Calcium- und Kaliumsulfat oder -carbonat, weiterhin futtermittelverträgliche Silikate wie Talk und Kieselsäuren. Die Menge an anorganischem Trägermaterial, bezogen auf die Gesamtmenge an Trägermaterial, wird in der Regel 50 Gew.-%, besonders 35 Gew.-% und ganz besonders 20 Gew.-% nicht überschreiten. In einer bevorzugten Ausführungsform machen die organischen Trägermaterialien die Gesamtmenge oder nahezu die Gesamtmenge, d.h. wenigstens 95 Gew.-% des Trägermaterials aus.

Weiterhin enthält der Enzymkern wenigstens eine Phytase, wobei auch Mischungen verschiedener Phytasen oder Mischungen von Phytase mit ein oder mehreren anderen Enzymen vorliegen können. Typische Enzyme für Futtermittel sind neben Phytase z.B. Oxidoreduktasen, Transferasen, Lyasen, Isomerasen, Ligasen, Lipasen und insbesondere von Phytase verschiedene Hydrolasen. Beispiele für Hydrolasen, d. h. Enzyme, welche eine hydrolytische Spaltung von chemischen Bindungen bewirken, sind Esterasen, Glycosidasen, Keratinasen, Etherhydrolasen, Proteasen, Amidasen, Aminidasen, Nitrilasen und Phosphatasen. Glycosidasen (EC 3.2.1, auch als Carbohydrasen bezeichnet) umfassen sowohl Endo- als auch Exo-Glycosidasen, die sowohl α- als auch β-glycosidische Bindungen spalten. Typische Beispiele hierfür sind Amylasen, Maltasen, Zellulasen, Endo-Xylanasen, z.B. endo-1,4-ß-Xylanase oder Xylan-endo-1,3-ß-xylosidase, ß-Glucanasen, insbesondere endo-1,4-ß- und endo-1,3-ß-Glucanasen, Mannanasen, Lysozyme, Galaktosidasen, Pectinasen, ß-Glucuronidasen und dergleichen.

Der Ausdruck "Phytase" umfasst sowohl natürliche Phytase als auch jedes andere Enzym, das Phytaseaktivität zeigt, beispielsweise in der Lage ist, eine Reaktion zu katalysieren, durch die Phosphor bzw. Phosphat aus myo-Inositolphosphaten freigesetzt wird. Bei der Phytase kann es sich sowohl um eine 3-Phytase (EC 3.1.3.8) als auch um eine 4- oder 6-Phytase (EC 3.1.3.26) oder um eine 5-Phytase (EC 3.1.3.72) oder um eine Mischung davon handeln. Vorzugsweise gehört die Phytase der Enzymklasse EC 3.1.3.8 an.

Die erfindungsgemäß eingesetzte Phytase unterliegt keinen Beschränkungen und kann sowohl mikrobiologischen Ursprungs sein als auch eine durch genetische Modifizierung einer natürlich vorkommenden Phytase oder eine durch de-novo Konstruktion erhaltene Phytase sein. Bei der Phytase kann es sich um eine Phytase aus Pflanzen, aus Pilzen, aus Bakterien oder um eine von Hefen produzierte Phytase handeln. Bevorzugt sind Phytasen aus mikrobiologischen Quellen wie Bakterien, Hefen oder Pilzen. Sie können jedoch auch pflanzlichen Ursprungs sein. In einer bevorzugten Ausführungsform handelt es sich um eine Phytase aus einem Pilzstamm, insbesondere aus einem Aspergillus-Stamm, z.B. Aspergillus niger, Aspergillus oryzae, Aspergillus ficuum, Aspergillus awamori, Aspergillus fumigatus, Aspergillus nidulans oder Aspergillus terreus. Besonders bevorzugt sind Phytasen, die aus einem Stamm von Aspergillus niger oder einem Stamm von Aspergillus oryzae abgeleitet sind. In einer anderen bevorzugten Ausführungsform ist die Phytase von einem Bakterienstamm, insbesondere einem Bacillus-Stamm, einem E. coli-Stamm oder einem Pseudomonas-Stamm abgeleitet, wobei hierunter Phytasen bevorzugt sind, die von einem Bacillus-Subtilis-Stamm abgeleitet sind. In einer anderen bevorzugten Ausführungsform ist die Phytase von einer Hefe, insbesondere einem Kluveromyces Stamm oder einem Saccharomyces-Stamm abgeleitet, wobei hierunter Phytasen bevorzugt sind, die von einem Stamm der Saccharomyces cerevisiae abgeleitet sind. In dieser Erfindung umfasst der Ausdruck "ein von Phytase abgeleitetes Enzym" die von dem jeweiligen Stamm natürlich produzierte Phytase, die entweder aus dem Stamm gewonnen wird oder die durch eine aus dem Stamm isolierte DNA Sequenz kodiert wird und durch einen Wirtsorganismus, der mit dieser DNA-Sequenz transformiert wurde, produziert wird. Die Phytase kann aus dem jeweiligen Mikroorganismus nach bekannten Techniken gewonnen werden, die typischerweise die Fermentation des Phytase-produzierenden Mikroorganismus in einem geeigneten Nährmedium (siehe z.B. ATCC-Katalog) und die anschließende Gewinnung der Phytase aus dem Fermentationsmedium nach Standardtechniken umfasst. Beispiele für Phytasen sowie für Verfahren zur Herstellung und Isolierung von Phytasen findet man in EP-A 420358, EP-A 684313, EP-A 897010, EP-A 897985, EP-A 10420358, WO 94/03072, WO 98/54980, WO 98/55599, WO 99/49022, WO 00/43503, WO 03/102174, auf deren Offenbarung hiermit ausdrücklich Bezug genommen wird.

Die Menge an Phytase in dem Kern richtet sich naturgemäß nach der gewünschten Aktivität des Enzymgranulats und der Aktivität des eingesetzten Enzyms und liegt typischerweise im Bereich von 3 bis 49,9 Gew.-%, häufig im Bereich von 5 bis 49,7 Gew.-% insbesondere im Bereich von 10 bis 44,5 Gew.-% und speziell im Bereich von 10 bis 39 Gew.-%, gerechnet als Trockenmasse und bezogen auf das Gesamtgewicht aller nichtwässrigen Bestandteile des Kernmaterials.

In einer bevorzugten Ausführungsform umfassen die den Kern bildenden Bestandteile neben dem futtermitteltauglichen Trägermaterial wenigstens ein in Wasser lösliches Polymer. Dieses Polymer wirkt als Bindemittel und erhöht zugleich die Pelletierstabilität. Bevorzugte wasserlösliche Polymere weisen ein zahlenmittleres Molekulargewicht im Bereich von 5x10³ bis 5 x10⁶ Dalton, insbesondere im Bereich von 1x10⁴ bis 10⁶ Dalton auf. Die Polymere gelten als wasserlöslich, wenn sich wenigstens 3 g Polymer in 1 Liter Wasser bei 20°C vollständig lösen lassen.

Zu den erfindungsgemäß eingesetzten wasserlöslichen Polymeren zählen
- Polysaccharide, z.B. wasserlösliche modifizierte Stärken mit in der Regel klebenden Eigenschaften, beispielsweise Stärkeabbauprodukte (Dextrine) wie Säuredextrine, Röstdextrine, enzymatische partial-Hydrolysate (Grenzdextrine), oxidativ abgebaute Stärken und deren Umsetzungsprodukte von Dextrinen mit kationischen oder anionischen Polymeren, Umsetzungsprodukte von Dextrinen mit Octenylsuccinatanhydrid (OSA), Stärkeleim, weiterhin Chitin, Chitosan, Carrageen, Alginate, Arabinsäure-Salze, Gummen, z.B. Gummi arabicum, Traganth, Karaya Gummi; Xanthan-Gum und Gellan-Gum; Galactomannane; wasserlösliche Cellulosederivate, z.B. Methylcellulose, Ethylcellulose und Hydroxyalkylcellulosen wie z.B. Hydroxyethylcellulose (HEC), Hydroxyethylmethylcellulose (HEMC), Ethylhydroxyethylcellulose (EHEC), Hydroxypropylcellulose (HPC), Hydroxypropylmethylcellulose (HPMC) und Hydroxybutylcellulose, sowie Carboxymethylcellulose (CMC);
- wasserlösliche Proteine, z.B. Proteine tierischen Ursprungs wie Gelatine, Casein, insbesondere Natriumcaseinat und pflanzliche Proteine, wie Sojaprotein, Erbsenprotein, Bohnenprotein, Rapsprotein, Sonnenblumenprotein, Baumwollsamenprotein, Kartoffelprotein, Lupin, Zein, Weizenprotein, Maisprotein und Reisprotein,
- synthetische Polymere, z.B. Polyethylenglykol, Polyvinylalkohol und insbesondere die Kollidon-Marken der Fa. BASF, Vinylalkohol-Vinylester-Copolymere, Homo- und Copolymere des Vinylpyrrolidons mit Vinylacetat und/oder C₁-C₄-Alkylacrylaten,
- und gegebenenfalls modifizierte Biopolymere, z.B. Lignin oder Polylactid.

Bevorzugte wasserlösliche Polymere sind neutral, d.h. sie weisen keine sauren oder basischen Gruppen auf. Hierunter sind Polyvinylalkohole, einschließlich teilweise verseifter Polyvinylacetate mit einem Verseifungsgrad von wenigstens 80 % sowie insbesondere wasserlösliche, neutrale Celluloseether wie Methylcellulose, Ethylcellulose und Hydroxyalkylcellulosen wie z.B. Hydroxyethylcellulose (HEC), Hydroxyethylmethylcellulose (HEMC), Ethylhydroxyethylcellulose (EHEC), Hydroxypropylcellulose (HPC), Hydroxypropylmethylcellulose (HPMC) und Hydroxybutylcellulose besonders bevorzugt.

In einer bevorzugten Ausführungsform der Erfindung ist das wasserlösliche Polymer unter neutralen Celluloseethern ausgewählt. Beispiele für erfindungsgemäß bevorzugte wasserlösliche, neutrale Celluloseether sind Methylcellulose, Ethylcellulose und Hydroxyalkylcellulosen, z.B. Hydroxyethylcellulose (HEC), Hydroxyethylmethylcellulose (HEMC), Ethylhydroxyethylcellulose (EHEC), Hydroxypropylcellulose (HPC), Hydroxypropylmethylcellulose (HPMC) und Hydroxybutylcellulose. Hierunter sind Methylcellulose, Ethylcellulose und gemischte Celluloseether mit Methylgruppen oder Ethylgruppen und Hydroxyalkylgruppen wie HEMC, EHEC und HPMC besonders bevorzugt. Bevorzuge Methyl- oder Ethyl-substituierte Celluloseether weisen einen Substitutionsgrad DS (bezüglich der Alkylgruppen) im Bereich von 0,8 bis 2,2 auf und im Falle gemischter Celluloseether einen Substitutionsgrad DS bezüglich der Alkylgruppen im Bereich von 0,5 bis 2,0 und einen Substitutionsgrad HS bezüglich der Hydroxyalkylgruppen im Bereich von 0,02 bis 1,0 auf.

Der Anteil an wasserlöslichen Polymeren liegt vorzugsweise im Bereich von 0,2 bis 10 Gew.-%, insbesondere 0,3 bis 5 Gew.-% und speziell 0,5 bis 3 Gew.-%, bezogen auf die den Teig bildenden, nichtwässrigen Bestandteile und ist dementsprechend in diesen Mengen Bestandteil des enzymhaltigen Rohgranulats.

Weiterhin kann das den Kern bildende Material zusätzlich ein das Enzym stabilisierendes Salz enthalten. Bei den stabilisierend wirkenden Salzen handelt es sich typischerweise um Salze 2-wertiger Kationen, insbesondere um Salze des Calciums, Magnesiums oder des Zinks, sowie um Salze einwertiger Kationen, insbesondere des Natriums oder des Kaliums, beispielsweise die Sulfate, Carbonate, Hydrogencarbonate und die Phosphate einschließlich Hydrogenphosphaten und Ammoniumhydrogenphosphaten dieser Metalle. Bevorzugte Salze sind die Sulfate. Besonders bevorzugt sind Magnesiumsulfat und Zinksulfat, einschließlich deren Hydrate. Die Menge an Salz liegt vorzugsweise im Bereich von 0,1 bis 10 Gew.-%, insbesondere im Bereich von 0,2 bis 5 Gew.-%, und speziell im Bereich von 0,3 bis 3 Gew.-%, bezogen auf das Gesamtgewicht aller nichtwässrigen Bestandteile des Kernmaterials.

Die Teilchen der erfindungsgemäßen Enzymgranulate weisen außerdem wenigstens eine auf dem Kern der Teilchen angeordnete Beschichtung auf. Die Beschichtung wird die Oberfläche der Kerne vorzugsweise zu wenigstens 80 % (Mittelwert) und insbesondere vollständig bedecken.

Das Gewichtsverhältnis von Kern zu Beschichtung liegt in der Regel im Bereich von 70:30 bis 99:1, vorzugsweise im Bereich von 75:25 bis 98:2, insbesondere im Bereich von 80:20 bis 96:4 und speziell im Bereich von 85:15 bis 95:5.

Geeignet sind hydrophobe Beschichtungen, d.h. Beschichtungen, deren Bestandteile nicht oder nur begrenzt in Wasser löslich sind. Dementsprechend betrifft die Erfindung phytasehaltige Enzymgranulate, deren Teilchen eine Beschichtung aufweisen, die zu wenigstens 90 Gew.-% aus in Wasser unlöslichen hydrophoben Substanzen besteht.

Als hydrophobe Materialien kommen für die hydrophobe Beschichtung sowohl polymere Substanzen als auch oligomere oder niedermolekulare Substanzen in Betracht. Erfindungsgemäß weisen die hydrophoben Materialien einen hohen Kohlenwasserstoffanteil auf, wobei der Anteil an Kohlenstoff und Wasserstoff wenigstens 80 Gew.-%, insbesondere wenigstens 85 Gew.-% des hydrophoben Materials ausmacht. Bevorzugt sind solche Substanzen, die einen Schmelzpunkt oberhalb 30°C, vorzugsweise oberhalb 40°C, insbesondere oberhalb 45°C und speziell oberhalb 50°C aufweisen, bzw. im Falle nicht schmelzender Substanzen bei diesen Temperaturen fest sind oder eine Glasübergangstemperatur oberhalb dieser Temperaturen aufweisen. Bevorzugt sind hydrophobe Materialien mit Schmelzpunkten im Bereich von 40 bis 95°C, insbesondere im Bereich von 45 bis 80 °C, und besonders bevorzugt im Bereich von 50 bis 70°C.

Bevorzugt ist das hydrophobe Material säurearm und weist eine Säurezahl unterhalb 80, insbesondere unterhalb 30 und speziell unterhalb 10 auf (bestimmt nach ISO-660). Beispiele für erfindungsgemäß geeignete hydrophobe Materialien sind
- Polyolefine wie Polyethylen, Polypropylen und Polybutene;
- gesättigte Fettsäuren mit vorzugsweise 10 bis 32 C-Atomen, häufig 12 bis 24 C-Atomen und insbesondere 16 bis 22 C-Atomen;
- Ester gesättigter Fettsäuren, vorzugsweise Mono-, Di- und Triglyceride sowie Ester gesättigter Fettsäuren mit Fettalkoholen. Die Fettalkohole weisen beispielsweise 10 bis 32 C-Atome, insbesondere 16 bis 24 C-Atome auf, wie Cetylalkohol oder Stearylalkohol. Die Fettsäuren bzw. die Fettsäurereste in den Fettsäureestern weisen vorzugsweise 10 bis 32, häufig 12 bis 24 C-Atome und insbesondere 16 bis 22 C-Atome auf;
- Wachse, insbesondere pflanzliche Wachse und Wachse tierischen Ursprungs, aber auch Montanwachse und Montanesterwachse;
- Polyvinylacetate;
- C₁-C₁₀-Alkyl(meth)acrylat-Polymere und -Copolymere, vorzugsweise solche mit einem zahlenmittleren Molekulargewicht von etwa 100 000 bis 1 000 000; insbesondere Ethylacrylat/Methylmethacrylat-Copolymeren und Methylacrylat/Ethylacrylat-Copolymeren

In einer bevorzugten Ausführungsform besteht das die Beschichtung bildende Material zu wenigstens 70 Gew.-%, besonders zu wenigstens 80 Gew.-%, insbesondere zu wenigstens 90 Gew.-% aus wenigstens einer, unter gesättigten Fettsäuren, Fettsäureestern und deren Mischungen ausgewählten Substanz, wobei Fettsäureester und insbesondere Triglyceride bevorzugt sind. Gesättigt bedeutet, dass das hydrophobe Material im Wesentlichen frei ist von ungesättigten Bestandteilen und dementsprechend eine Iodzahl unterhalb 5 und insbesondere unterhalb 2 aufweist (Methode nach Wijs, DIN 53 241).

Insbesondere bevorzugt besteht die Beschichtung zu wenigstens 70 Gew.-%, insbesondere wenigstens 80 Gew.-% und speziell wenigstens 90 Gew.-% aus den vorgenannten Triglyceriden.

In einer bevorzugten Ausführungsform der Erfindung enthält das Beschichtungsmittel überwiegend, d.h. zu wenigstens 70 Gew.-%, insbesondere wenigstens 80 Gew.-% und speziell über 90 Gew.-% hydrierte pflanzliche Öle, insbesondere Triglyceride pflanzlichen Ursprungs, z.B. hydrierte Baumwollsamen-, Mais-, Erdnuss-, Sojabohnen-, Palm-, Palmkern-, Babassu-, Raps-, Sonnenblumen- und Färberdistelöle. Hierunter besonders bevorzugte hydrierte pflanzliche Öle sind hydriertes Palmöl, Baumwollsamenöl und Sojabohnenöl. Das am meisten bevorzugte hydrierte pflanzliche Öl ist hydriertes Sojabohnenöl. In gleicher Weise sind auch andere von Pflanzen und Tieren stammende Fette und Wachse geeignet, beispielsweise Rindertalgfett. Geeignet sind auch naturidentische Fette und Wachse, d.h. synthetische Wachse und Fette mit einer Zusammensetzung, die der natürlicher Produkte überwiegend entspricht.

Die folgende Tabelle nennt einige Beispiele erfindungsgemäß geeigneter Beschichtungsmaterialien:

| **Bezeichnung** | **Zusammensetzung** | **Schmelzbereich** | **CAS-Nr. / INCI** |
|---|---|---|---|
| Cutina CP von Cognis | synthetisches Cetylpalmitat | 46 - 51 °C | 95912-87-1 Cetyl Palmitate |
| Edenor NHTI-G von Cognis | Triglycerid | 56 - 60 °C | 67701-27-3* |
| Edenor NHTI-V von Cognis | Triglycerid | 57 - 60 °C | 67701-27-3* EINECS 266-945-8 |
| Edenor C1892 von Cognis | Stearinsäure, C16 - 18 | 66 - 99 °C | |
| Edenor HPA von Cognis | Fettsäuren, Palmöl, hydriert, C16 - 18 | 55 - 57 °C | |
| Edenor HRAGW von Cognis | Fettsäuren, C 16 -22 | 64 - 66 °C | |
| Edenor C2285R von Cognis | Fettsäuren, C18 - 22 | 75 - 78 °C | 68002-88-0* |
| Rilanit von Cognis | Triglycerid | 83 - 90 °C | |
| Japanwachsersatz von Kahl - Wachs-raffinerie | hauptsächlich Palmitinsäuregly-cerinester | 49 - 55 °C | rhus succedanea |
| Tefacid von Karlshamns | palm kernel oil Tefacid Palmic 90 | 65 °C | 57-10-3 |
| Soybean fat powder von Sankyu/Japan | | 65 - 70 °C | |

Geeignet sind außerdem die unter der Handelsbezeichnung Vegeol PR vertriebenen Produkte der Fa. Aarhus Olie, DK, z.B. Vegeol® PR 267, PR 272, PR 273, PR 274, PR 275, PR 276, PR 277, PR 278 und PR 279.

Als Wachse sind insbesondere Wachse tierischen Ursprungs wie Bienenwachs und Wollwachs, Wachse pflanzlichen Ursprungs wie Candelillawachs, Carnaubawachs, Rohrzuckerwachs, Carandaywachs, Raffiawachs , Columbiawachs, Espartowachs, Alfalfawachs, Bambuswachs, Hempwachs, Douglasfichtenwachs, Korkwachs, Sisalwachs, Flaxwachs, Baumwollwachs, Dammarwachs, Getreidewachs, Reiswachs, Ocatillawachs, Oleanderwachs, Montanwachse, Montanesterwachse, Polyethylenwachse, außerdem die unter dem Handelsnamen Wükonil, Südranol, Lubranil oder Mikronil vertriebenen Produkte der Fa. Süddeutsche Emulsions-Chemie, oder die Produkte mit dem Handelsnamen Poligen WE1, WE3, WE4, WE6, WE7, WE8 BW, WE9 der BASF als Beschichtungsmaterial geeignet.

Geeignete hydrophobe Beschichtungsmaterialien sind außerdem die folgenden Polyolefine: Polyisopren, mittel- und hochmolekulares Polyisobuten und Polybutadien

In bevorzugten Alkyl(meth)acrylat-Polymeren und -Copolymeren weist die Alkylgruppe 1 bis 4 Kohlenstoffatome auf. Als konkrete Beispiele für geeignete Copolymere sind zu nennen: Ethylacrylat/Methylmethacrylat-Copolymere, welche beispielsweise unter den Handelsnamen Kollicoat EMM 30D von der BASF AG oder unter dem Handelsnamen Eudragit NE 30 D von der Fa. Degussa vertrieben werden; sowie Methacrylat/Ethylacrylat-Copolymere, wie sie beispielsweise unter dem Handelsnamen Kollicoat MAE 30DP von der BASF AG oder unter dem Handelsnamen Eudragit 30/55 von der Fa. Degussa in Form einer wässrigen Dispersion vertrieben werden.

Als Beispiele für Polyvinylacetat-Dispersionen sind solche zu nennen, welche mit Polyvinylpyrolidon stabilisiert sind und beispielsweise unter der Handelsbezeichnung Kollicoat SR 30D von der BASF AG vertrieben werden (Feststoffgehalt der Dispersion etwa 20 bis 30 Gew.-%).

In einer anderen Ausführungsform umfasst die Beschichtung polymere Substanzen, die in Wasser eine zumindest begrenzte Löslichkeit aufweisen. Beispiele hierfür sind
a) Polyalkylenglykole, insbesondere Polyethylenglykole, vorzugsweise solche mit einem zahlenmittleren Molekulargewicht von etwa 400 bis 15 000, wie z. B. etwa 400 bis 10 000;
b) Polyalkylenoxid-Polymere oder -Copolymere, vorzugsweise solche mit einem zahlenmittleren Molekulargewicht von etwa 4 000 bis 20 000, wie z. B. etwa 7 700 bis 14 600; insbesondere Blockcopolymeren von Polyoxyethylen und Polyoxypropylen;
c) Polyvinylpyrrolidon, vorzugsweise mit einem zahlenmittleren Molekulargewicht von etwa 7 000 bis 1 000 000, wie z. B. etwa 44 000 bis 54 000;
d) VinylpyrrolidonNinylacetat-Copolymere, vorzugsweise solche mit einem zahlenmittleren Molekulargewicht von etwa 30 000 bis 100 000, wie z. B. etwa 45 000 bis 70 000;
e) Polyvinylalkohole, vorzugsweise solche mit einem zahlenmittleren Molekulargewicht von etwa 10 000 bis 200 000, wie z. B. etwa 20 000 bis 100 000;
f) Modifizierte Cellulosen bzw. Cellulosederivate, wie z.B. Hydroxypropylmethylcellulose, vorzugsweise mit einem zahlenmittleren Molekulargewicht von etwa 6 000 bis 80 000, wie z. B. etwa 12 000 bis 65 000; aber auch Methylcellulose, Ethylcellulose und Hydroxyalkylcellulosen wie z.B. Hydroxyethylcellulose (HEC), Hydroxyethylmethylcellulose (HEMC), Ethylhydroxyethylcellulose (EHEC), Hydroxypropylcellulose (HPC) und
g) Polyvinylalkohol-Polyethylenglykol-Pfropfcopolymere;
h) Modifizierte Stärken (z.B. Umsetzungsprodukte aus Octenylsuccinatanhydrid (OSA) und Stärke).

Als Beispiele für geeignete Polyalkylenglykole a) sind zu nennen: Polypropylenglycole und insbesondere Polyethylenglycole unterschiedlicher Molmasse, wie z. B. PEG 4000 oder PEG 6000, erhältlich von der BASF AG unter den Handelsnamen Lutrol® E-4000 und Lutrol® E 6000 sowie die Kollidon-Marken der Fa. BASF.

Als Beispiele für obige Polymere b) sind zu nennen: Polyethylenoxide und Polypropylenoxide, Ethylenoxid/Propylenoxid-Mischpolymere sowie Blockcopolymere, aufgebaut aus Polyethylenoxid- und Polypropylenoxidblöcken, wie z. B. Polymere, die von der BASF AG unter der Handelsbezeichnung Lutrol® F68 und Lutrol® F127 erhältlich sind.

Als Beispiele für obige Polymere c) sind zu nennen: Polyvinylpyrrolidone, wie sie beispielsweise von der BASF AG unter dem Handelsnamen Kollidon® oder Luviskol® vertrieben werden.

Als Beispiel für oben genannte Polymere d) ist zu nennen: ein VinylpyrrolidonNinylacetat-Copolymeres, welches von der BASF AG unter der Handelsbezeichnung Kollidon® VA64 vertrieben wird.

Als Beispiele für obige Polymere e) sind zu nennen: Produkte, wie sie beispielsweise von der Fa. Clariant unter der Handelsbezeichnung Mowiol® vertrieben werden.

Als Beispiele für geeignete Polymere f) sind zu nennen: Hydroxypropylmethylcellulosen, wie sie z. B. vertrieben werden von Shin Etsu unter dem Handelsnamen Pharmacoat®.

Beispiele für die Polymere g) sind die unter der Handelsbezeichnung Kollicoat® IR vertriebenen Produkte der BASF Aktiengesellschaft.

Es versteht sich, dass die erfindungsgemäßen Enzymgranulate neben der hydrophoben Beschichtung auch ein oder mehrere, z.B. 1, 2 oder 3 weitere Beschichtungen aufweisen können, die aus anderen Materialien bestehen, z.B. die im Stand der Technik gelehrten Beschichtungen. Erfindungswesentlich ist, dass wenigstens eine Beschichtung aus den hydrophoben Materialien besteht, wobei diese Schicht beliebig angeordnet sein kann und insbesondere direkt auf dem enzymhaltigen Kern angeordnet ist. Es besteht zudem die Möglichkeit, dass es sich bei mindestens einer Schicht um eine Salzschicht oder eine Schicht, die zu mindestens 30 % aus Salz besteht, handelt. Dabei wird eine solche Salzschicht bevorzugt zwischen dem Kern und der äußersten Schicht angeordnet sein. Die weiter oben genannten Salze können hier als Beispiel genannt werden.

Die erfindungsgemäßen Enzymgranulate können in Analogie zu bekannten Herstellungsverfahren für beschichtete Enzymgranulate hergestellt werden, z.B. in Analogie zu den in WO 01/00042, WO 03/059086 oder PCT/EP 2005/000826 beschriebenen Vorgehensweisen.

Die erfindungsgemäßen Enzymgranulate weisen vorteilhafterweise eine mittlere Teilchengröße (Teilchendurchmesser) im Bereich von 100 bis 2000 µm, insbesondere im Bereich von 200 bis 1500 µm und speziell im Bereich von 300 bis 1000 µm auf. Die Geometrie der Granulatteilchen ist in der Regel zylinderförmig mit einem Verhältnis von Durchmesser zu Länge von etwa 1:1,3 bis 1:3 und mit gegebenenfalls gerundeten Enden. Typischerweise entsprechen die Teilchengrößen der erfindungsgemäßen, beschichteten Enzymgranulate denen der unbeschichteten Kerne, die im Folgenden auch als Rohgranulate bezeichnet werden, d.h. das Verhältnis von mittlerem Teilchendurchmesser des erfindungsgemäßen Granulats zu dem mittleren Teilchendurchmesser des Rohgranulats wird in der Regel einen Wert von 1,1:1 und insbesondere einen Wert von 1,09:1 nicht überschreiten.

Die erfindungsgemäßen phytasehaltigen Enzymgranulate weisen vorzugsweise eine Phytaseaktivität im Bereich von 1 x 10³ bis 1 x 10⁵ FTU, insbesondere 5 x 10³ bis 5 x 10⁴ FTU, und speziell 1 x 10⁴ bis 3 x 10⁴ FTU auf. 1 FTU Phytaseaktivität ist dabei definiert als die Menge an Enzym, die 1 Mikromol anorganisches Phosphat pro Minute aus 0.0051 mol/l wässrigem Natrium-Phytat bei pH 5,5 und 37°C freisetzt. Die Bestimmung der Phytaseaktivität kann beispielsweise gemäß "Determination of Phytase Activity in Feed by a Colorimetric Enzymatic Method": Collaborative Interlaboratory Study Engelen et al.: Journal of AOAC International Vol. 84, No. 3, 2001, oder auch Simple and Rapid Determination of Phytase Activity, Engelen et al., Journal of AOAC International, Vol. 77, No. 3, 1994 durchgeführt werden.

Die erfindungsgemäßen Enzymgranulate können in Analogie zu bekannten Herstellungsverfahren für beschichtete Enzymgranulate hergestellt werden, z.B. in Analogie zu den in WO 01/00042, WO 03/059086 oder PCT/EP 2005/000826 beschriebenen Vorgehensweisen.

Gemäß einer bevorzugten Ausführungsform umfasst das Verfahren die folgenden Schritte:
a) Bereitstellung eines unbeschichteten, phytasehaltigen Rohgranulats, das wenigstens eine Phytase und wenigstens ein für Futtermittel geeignetes festes Trägermaterial umfasst und das beim Suspendieren oder Lösen nach ggf. erforderlicher Zermahlung in Wasser bei 25°C einen pH-Wert im Bereich von 4,5 bis 6,5, bevorzugt im Bereich von 4,6 bis 6,0 und besonders bevorzugt im Bereich von 4,7 bis 5,5 ergibt, und das in der Regel einen Wassergehalt unterhalb 15 Gew.-%, häufig im Bereich von 1 bis 12 Gew.-%, insbesondere im Bereich von 3 bis 10 Gew.-% und speziell im Bereich von 5 bis 9 Gew.-%, bezogen auf das Gewicht des enzymhaltigen Rohgranulats, aufweist, und
b) Beschichten des Rohgranulats.

Die Herstellung des Rohgranulats kann grundsätzlich in beliebiger Weise erfolgen. Beispielsweise kann man ein Gemisch; umfassend den futtermitteltauglichen Träger, wenigstens ein in Wasser lösliches, neutrales Cellulosederivat und wenigstens ein Enzym und gegebenenfalls weitere Bestandteile wie Wasser, Puffer, stabilisierende Metallsalze, durch Extrusion, Mischergranulation, Wirbelschichtgranulation, Telleragglomeration oder Kompaktierung in an sich bekannter Weise zu einem Rohgranulat verarbeiten.

In einer bevorzugten Ausführungsform umfasst die Herstellung des Rohgranulats in einem ersten Schritt die Extrusion eines wasserhaltigen Teigs, der wenigstens ein in Wasser lösliches, neutrales Cellulosederivat und wenigstens ein Enzym und gegebenenfalls weitere Bestandteile wie Wasser, Puffer, stabilisierende Metallsalze in den oben angegebenen Mengen umfasst. In der Regel umfasst die Herstellung des Teigs eine Einstellung des pH-Wertes dergestalt, dass der Teig beim Suspendieren in Wasser einen pH-Wert im Bereich von 4,5 bis 6,5, bevorzugt im Bereich von 4,6 bis 6,0 und besonders bevorzugt im Bereich von 4,7 bis 5,5 aufweist. Die Einstellung des pH-Wertes kann durch Zugabe eines Puffers oder einer Base zum Teig erfolgen. Vorzugsweise nimmt man eine Einstellung des pH-Wertes des Teigs dergestalt vor, dass man den Teig unter Verwendung eines wässrigen Enzymkonzentrats herstellt, dessen pH-Wert beim Verdünnen im Bereich von 4,5 bis 6,5, bevorzugt im Bereich von 4,6 bis 6,0 und besonders bevorzugt im Bereich von 4,7 bis 5,5 liegt. Da das Enzymkonzentrat häufig einen schwach sauren pH-Wert unterhalb 4 aufweist, wird man bevorzugt einen Puffer oder eine Base zusetzen. Geeignete Basen sind neben Ammoniak, Ammoniakwasser und Ammoniumhydroxid Alkalimetall- und Erdalkalimetallhydroxide, -citrate, -acetate, -formiate, -carbonate und -hydrogencarbonate sowie Amine und Erdalkalimetalloxide wie CaO und MgO. Beispiele für anorganische Pufferungsmittel sind Alkalimetallhydrogenphosphate, insbesondere Natrium- und Kaliumhydrogenphosphate, z.B. K₂HPO₄, KH₂PO₄ und Na₂HPO₄. Bevorzugtes Mittel zur Einstellung des pH-Wertes ist Ammoniak oder Ammoniakwasser, NaOH, KOH. Geeignete Puffer sind z.B. Mischungen der vorgenannten Basen mit organischen Säuren wie Essigsäure, Ameisensäure, Citronensäure.

Das Trägermaterial macht in der Regel 50 bis 96,9 Gew.-%, vorzugsweise 55 bis 94,8 Gew.-% und insbesondere 60 bis 89,7 Gew.-% der nichtwässrigen Bestandteile des Teigs aus. Das wenigstens eine, in Wasser lösliche, neutrale Cellulosederivat macht in der Regel 0,1 bis 10 Gew.-%, vorzugsweise 0,15 bis 5 Gew.-%, insbesondere 0,2 bis 2 Gew.-% und speziell 0,3 bis 1 Gew.-%, der nichtwässrigen Bestandteile des Teigs aus. Das wenigstens eine Enzym macht in der Regel 3 bis 49,9 Gew.-%, insbesondere 5 bis 49,8 Gew.-% und speziell 10 bis 39,7 Gew.-% der nichtwässrigen Bestandteile des Teigs aus. Der Anteil sonstiger Bestandteile entspricht den oben für die Zusammensetzung des Kerns angegebenen Mengenanteilen.

Neben den vorgenannten Bestandteilen enthält der Teig Wasser in einer Menge, die eine ausreichende Homogenisierung der den Teig bildenden Bestandteile und eine hinreichende Konsistenz (Plastifizierung) des Teigs für die Extrusion gewährleistet. Die hierfür erforderliche Wassermenge kann von einem Fachmann auf dem Gebiet der Enzymformulierung in an sich bekannter Weise ermittelt werden. Der Wasseranteil im Teig liegt typischerweise im Bereich von > 15 bis 50 Gew.-%, insbesondere im Bereich von 20 bis 45 Gew.-% und speziell im Bereich von 25 bis 40 Gew.-%, bezogen auf das Gesamtgewicht des Teigs.

Die Herstellung des Teigs erfolgt in an sich bekannter Weise durch Vermischen der den Teig bildenden Bestandteile in einer geeigneten Mischvorrichtung, beispielsweise in einem üblichen Mischer oder Kneter. Dazu werden der bzw. die Feststoffe, z.B. das Trägermaterial, mit der flüssigen Phase, beispielsweise Wasser, eine wässrige Bindemittel-Lösung oder ein wässriges Enzymkonzentrat intensiv vermischt. In der Regel wird man den Träger als Feststoff in den Mischer einbringen und mit einem wässrigen Enzymkonzentrat sowie mit dem wasserlöslichen Polymer, vorzugsweise in Form einer separaten wässrigen Lösung oder gelöst in dem wässrigen Enzymkonzentrat, sowie gegebenenfalls mit dem stabilisierenden Salz, vorzugsweise in Form einer separaten wässrigen Lösung oder Suspension, insbesondere gelöst oder suspendiert in dem wässrigen Enzymkonzentrat, vermischen. Gegebenenfalls wird man weiteres Wasser zur Einstellung der gewünschten Konsistenz des Teigs zufügen. Vorzugsweise wird man während des Durchmischens eine Temperatur von 60°C, insbesondere von 40°C nicht überschreiten. Besonders bevorzugt beträgt die Temperatur des Teigs während des Mischens 10 bis 30°C. Gegebenenfalls wird man daher die Mischvorrichtung während der Teigherstellung kühlen.

Der so erhaltene Teig wird anschließend einer Extrusion, vorzugsweise einer Extrusion bei niedrigem Druck unterworfen. Das Extrudieren, insbesondere das Extrudieren bei niedrigem Druck, erfolgt in der Regel in einem Apparat, bei dem die zu extrudierende Masse (Teig) durch eine Matrize gedrückt wird. Der Lochdurchmesser der Matrize bestimmt den Teilchendurchmesser und liegt in der Regel im Bereich von 0,3 bis 2 mm und insbesondere im Bereich von 0,4 bis 1,0 mm. Geeignete Extruder sind z. B. Domextruder oder Korbextruder, die unter anderem von Firmen wie Fitzpatrick oder Bepex vertrieben werden. Bei richtiger Konsistenz der zu granulierenden Masse ergibt sich hierbei ein nur geringer Temperaturanstieg beim Passieren der Matrize (bis ca. 20°C). Vorzugsweise erfolgt die Extrusion unter Temperaturkontrolle, d.h. die Temperatur des Teigs sollte während des Extrudierens eine Temperatur von 70°C, insbesondere 60°C nicht überschreiten. Insbesondere liegt die Temperatur des Teigs während der Extrusion im Bereich von 20 bis 50°C.

Die den Extruder verlassenden extrudierten Teigstränge zerbrechen in kurze granulatartige Partikel oder können gegebenenfalls mit Hilfe geeigneter Schneidvorrichtungen gebrochen werden. Die so erhaltenen Granulatpartikel weisen typischerweise eine homogene Korngröße, d.h. eine enge Korngrößenverteilung auf.

Auf diese Weise erhält man ein Rohgranulat mit einem vergleichsweise hohen Wassergehalt, der in der Regel mehr als 15 Gew.-%, beispielsweise im Bereich von 15 bis 50 Gew.-%, insbesondere im Bereich von 20 bis 45 Gew.-%, bezogen auf das Gesamtgewicht des feuchten Rohgranulats beträgt. Erfindungsgemäß wird es daher vor dem Beschichten in einer Weise getrocknet, dass sein Wassergehalt nicht mehr als 15 Gew.-% beträgt und vorzugsweise im Bereich von 1 bis 12 Gew.-%, insbesondere im Bereich von 3 bis 10 Gew.-% und speziell im Bereich von 5 bis 9 Gew.-% liegt.

Die Konfektionierung umfasst dementsprechend in der Regel einen Trocknungsschritt. Dieser erfolgt bevorzugt in einem Wirbelschichttrockner. Hierbei wird ein erwärmtes Gas, in der Regel Luft oder ein Stickstoffgasstrom von unten durch die Produktschicht geleitet. Die Gasmenge wird üblicherweise so eingestellt, dass die Teilchen fluidisiert werden und wirbeln. Durch den Wärmeübergang Gas/Teilchen wird das Wasser verdunstet. Da enzymhaltige Rohgranulate in der Regel temperaturlabil sind, wird man darauf achten, dass die Temperatur des Rohgranulats nicht zu hoch ansteigt, d. h. in der Regel nicht über 80°C und bevorzugt nicht über 70°C. Insbesondere liegt die Temperatur des Granulats während des Trocknens im Bereich von 30 bis 70°C. Die Trocknungstemperatur kann in einfacher Weise über die Temperatur des Gasstroms gesteuert werden. Die Temperatur des Gasstroms liegt typischerweise im Bereich von 140 bis 40°C und insbesondere im Bereich von 120 bis 60°C. Die Trocknung kann kontinuierlich und diskontinuierlich erfolgen.

Nach der Trocknung kann das Granulat noch mittels eines Siebes fraktioniert werden (optional). Grob- und Feingut können gemahlen und in den Mischer zum Anmaischen der Granuliermasse rückgeführt werden.

Ferner hat es sich als vorteilhaft erwiesen, das noch feuchte Rohgranulat vor Durchführung der Trocknung zu runden, d.h. zu spheronisieren. Hierbei wird insbesondere die Bildung unerwünschter Staubanteile im Endprodukt verringert.

Zur Rundung der feuchten Rohgranulate geeignete Vorrichtungen sind sog. Spheronizer, die im Wesentlichen eine horizontal rotierende Scheibe, auf der die Stränglinge durch die Zentrifugalkraft an die Wand gedrückt werden, aufweisen. Die Stränglinge brechen an den durch den Extrusionsprozess vorgegebenen Mikrokerben auf, so dass zylinderförmige Teilchen mit einem Verhältnis von Durchmesser zu Länge von etwa 1:1,3 bis 1:3 entstehen. Durch die mechanische Beanspruchung im Spheronizer werden die zunächst zylinderförmigen Teilchen etwas gerundet.

Die nach dem Konfektionieren erhaltenen Rohgranulate weisen vorteilhafterweise eine mittlere Teilchengröße im Bereich von 100 bis 2000 µm, insbesondere im Bereich von 200 bis 1500 µm und speziell im Bereich von 300 bis 1000 µm auf. Die mittlere Teilchengrößenverteilung kann in an sich bekannter Weise durch Lichtstreuung, z.B. mit einem Mastersizer S, der Fa. Malvern Instruments GmbH oder durch Siebanalyse, z.B. mit einer Siebmaschine Typ Vibro VS 10000 der Fa. Retsch bestimmt werden. Unter der mittleren Teilchengröße versteht der Fachmann den sog. D₅₀-Wert der Teilchengrößenverteilungskurve, d.h. den Wert; den 50 Gew.-% aller Teilchen über- bzw. unterschreiten. Bevorzugt sind Rohgranulate mit einer engen Teilchengrößenverteilung.

Gemäß einer weiteren Ausführungsform erfolgt die Herstellung des Rohgranulats durch Sprühtrocknung, Sprühgranulierung, Sprühagglomeration, Kompaktierung, Granulation im high-shear-Mischer oder ähnlichen Apparaten und Verfahren, in denen mechanische Energie in Form von bewegten Bauteilen und/oder dem Einbringen eines Gasstroms eingetragen wird und so der Partikelaufbau bzw. die Rohgranulatherstellung erfolgt.

Eine weitere Alternative stellt auch die Rohgranulatherstellung durch Absorption dar Hier wird das Enzymkonzentrat oder eine Enzymlösung mit einem Trägermaterial in Kontakt gebracht (durch Zugabe oder Aufsprühen der Lösung). Als Trägermaterialien kommen die weiter oben genannten Trägermaterialien infrage. Das Enzym diffundiert mit dem in der Lösung vorhandenen Lösungsmittel, vorzugsweise Wasser, bei diesem Verfahren teilweise oder vollständig in das Trägermaterial. Das Lösungsmittel, vorzugsweise Wasser, kann anschließend oder parallel durch thermische Verfahren entfernt werden. Dies kann z.B. in einer Wirbelschicht, einem Wirbelschichttrockner oder anderen Trocknern erfolgen.

Anschließend wird das so erhaltene Rohgranulat beschichtet. Hierzu wird man in an sich bekannter Weise eines der vorgenannten Beschichtungsmaterialien auf das Rohgranulat aufbringen. Das Aufbringen des die Beschichtung bildenden Materials kann in an sich bekannter Weise durch Aufbringen einer Lösung, Dispersion oder Suspension des die Beschichtung bildenden Materials in einem geeigneten Lösungsmittel, beispielsweise Wasser oder durch Aufbringen einer Schmelze des Materials erfolgen. Das Aufbringen einer Schmelze ist erfindungsgemäß bevorzugt, weil hierdurch auf das anschließende Entfernen des Lösungs- oder Dispersionsmittels verzichtet werden kann. Das heißt, dass für das Aufbringen einer Schmelze die Verwendung eines teuren Trockners/Coaters (z.B. eines Wirbelschichttrockners) nicht erforderlich ist, sondern der Einsatz eines Mischers möglich wird. Das Beschichten mit einer Schmelze des Materials wird im Folgenden auch als Schmelzcoating bezeichnet.

Geeignete Verfahren zum Aufbringen der Beschichtung umfassen das Beschichten in einer Wirbelschicht bzw. im Wirbelbett, sowie das Beschichten in einem Mischer (kontinuierlich oder batchweise), z.B. in einer Granuliertrommel, einem Pflugscharmischer z.B. der Fa. Lödige, einem Paddel-Mischer z.B. der Firma Forberg, einem Nauta-Mischer, einem Granuliermischer, einem Granuliertrockner, einem Vakuumcoater z.B. der Fa. Forberg oder einem High-Shear-Granulator erfolgen.

Insbesondere erfolgt das Beschichten des Rohgranulats
i) in einer Wirbelschicht bzw. im Wirbelbett, z.B. durch Besprühen des Rohgranulates mit einer Schmelze, einer Lösung oder Dispersion des die Beschichtung bildenden Materials; sowie
ii) in einer der vorgenannten Mischvorrichtungen durch Einbringen des Rohgranulats in eine Schmelze des die Beschichtung bildenden Materials oder durch Besprühen oder Begießen des Rohgranulates mit einer Schmelze, einer Lösung oder Dispersion des die Beschichtung bildenden Materials.

Das Beschichten durch Besprühen des Rohgranulates mit einer Schmelze, einer Lösung oder Dispersion in einer Wirbelschicht bzw. im Wirbelbett ist erfindungsgemäß besonders bevorzugt. Das Besprühen des Rohgranulats mit einer Schmelze, einer Lösung oder Dispersion des Materials kann in der Wirbelschichtapparatur prinzipiell im Bottom-Spray-Verfahren (Düse sitzt im Anströmboden und sprüht nach oben) oder im Top-Spray-Verfahren (Coating wird von oben in die Wirbelschicht eingesprüht) durchgeführt werden.

Das Beschichten des Rohgranulats kann im Rahmen des erfindungsgemäßen Verfahrens kontinuierlich oder diskontinuierlich durchgeführt werden.

Gemäß einer ersten bevorzugten Ausführungsform des erfindungsgemäßen Verfahrens wird das Rohgranulat in einem Wirbelbett vorgelegt, verwirbelt und durch Aufsprühen einer wässrigen oder nichtwässrigen, vorzugsweise wässrigen Dispersion des die Beschichtung bildenden Materials mit diesem Material beschichtet. Dazu verwendet man vorzugsweise eine möglichst hochkonzentrierte, noch sprühfähige Flüssigkeit, wie z. B. eine 10 bis 50 Gew.-%ige wässrige Dispersion oder nichtwässrige Lösung oder Dispersion des Materials.

Das Aufsprühen der Lösung oder Dispersion des Materials wird vorzugsweise so durchgeführt, dass man das Rohgranulat in einer Wirbelschichtapparatur oder einem Mischer vorlegt und unter gleichzeitigem Erwärmen der Vorlage das Sprühgut aufsprüht. Die Energiezufuhr erfolgt in der Wirbelschichtapparatur durch Kontakt mit erwärmtem Trocknungsgas, häufig Luft. Eine Vorwärmung der Lösung oder Dispersion kann dann sinnvoll sein, wenn dadurch Sprühgut mit höherem Trockensubstanzanteil versprüht werden kann. Im Falle der Verwendung von organischen Flüssigphasen ist eine Lösungsmittelrückgewinnung zweckmäßig und der Einsatz von Stickstoff als Trocknungsgas zur Vermeidung explosionsfähiger Gasgemische bevorzugt. Die Produkttemperatur während des Beschichtens sollte im Bereich von etwa 30 bis 80 °C und insbesondere im Bereich von 35 bis 70°C und speziell im Bereich von 40 bis 60°C liegen. Das Beschichten kann in der Wirbelschichtapparatur prinzipiell im Bottom-Spray-Verfahren (Düse sitzt im Anströmboden und sprüht nach oben) oder im Top-Spray-Verfahren (Coating wird von oben in die Wirbelschicht eingesprüht) durchgeführt werden. Bei Einsatz eines Mischers zum Coaten muss nach dem Aufsprühen der Lösung oder Dispersion das Lösungsmittel oder die Flüssigkeit der Dispersion entfernt werden. Dies kann in einem Trockner durchgeführt werden.

Gemäß einer zweiten, besonders bevorzugten Ausführungsform des erfindungsgemäßen Verfahrens erfolgt die Beschichtung des in einem Wirbelbett oder Mischer vorgelegten Rohgranulats mittels einer Schmelze des die Beschichtung bildenden Materials.

Das Schmelzcoating in einer Wirbelschicht wird vorzugsweise so durchgeführt, dass man das zu beschichtende Rohgranulat in der Wirbelschichtapparatur vorlegt. Das für die Beschichtung vorgesehene Material wird in einem externen Reservoir aufgeschmolzen und beispielsweise über eine beheizbare Leitung zur Sprühdüse gepumpt. Eine Erwärmung des Düsengases ist zweckmäßig. Sprührate und Eintrittstemperatur der Schmelze werden vorzugsweise so eingestellt, dass das Material noch gut auf der Oberfläche des Granulats verläuft und dieses gleichmäßig überzieht. Eine Vorwärmung des Granulats vor Einsprühung der Schmelze ist möglich. Bei Materialien mit hohem Schmelzpunkt wird man in der Regel die Temperatur so wählen, dass ein Verlust an Enzymaktivität weitgehend vermieden wird. Die Produkttemperatur sollte daher vor-zugsweise im Bereich von etwa 30 bis 80°C und insbesondere im Bereich von 35 bis 70°C und speziell im Bereich von 40 bis 60°C liegen. Auch das Schmelzcoating kann im Prinzip nach dem Bottom-Spray-Verfahren oder nach dem Top-Spray-Verfahren durchgeführt werden.

Das Schmelzcoating in einem Mischer kann auf zwei verschiedene Weisen durchgeführt werden. Entweder legt man das zu coatende Granulat in einem geeigneten Mischer vor und sprüht oder gießt eine Schmelze des Materials in den Mischer ein. Eine andere Möglichkeit besteht darin, das in fester Form vorliegende hydrophobe Material mit dem Produkt zu vermischen. Durch Zuführung von Energie über die Behälterwand oder über die Mischwerkzeuge wird das hydrophobe Material aufgeschmolzen und überzieht so das Rohgranulat. Je nach Bedarf kann von Zeit zu Zeit etwas Trennmittel zugegeben werden. Geeignete Trennmittel sind beispielsweise Kieselsäure, Talkum, Stearate und Tricalciumphosphat, oder Salze wie Magnesiumsulfat, Natriumsulfat oder Calciumcarbonat.

Die zur Beschichtung verwendeten Lösungen, Dispersionen oder Schmelzen können gegebenenfalls weitere Zusätze, wie z. B. mikrokristalline Cellulose, Talkum und Kaolin, oder Salze zugesetzt werden.

In einer besonderen erfindungsgemäßen Ausführungsform des Verfahrens kann auf die Zugabe von Trennmitteln während des Aufbringens des Materials oder der Zusatz von Trennmittel zur aufzubringenden Lösung, Dispersion oder Schmelze verzichtet werden. Dies ist insbesondere dann möglich, wenn die verwendeten Enzymkerne mittlere Partikelgrößen von wenigstens 300 µm, vorzugsweise wenigstens 350 µm, insbesondere wenigstens 400 µm aufweisen, z.B. im Bereich von 250 bis 1600 µm, vorzugsweise im Bereich von 300 µm bis 1500 µm und insbesondere im Bereich von 400 µm bis 1400 µm liegen, und gleichzeitig die Menge an verwendetem CoatingMaterial bezogen auf das Gesamtpartikel nicht mehr als 30 Gew.-%, vorzugsweise nicht mehr als 25 Gew.-%, insbesondere nicht mehr als 20 Gew.-% und speziell nicht mehr als 17 Gew.-% beträgt. In diesen Fällen lassen sich Enzymkerne besonders gut ohne Agglomeration der Partikel beschichten.

Die Zugabe eines Fließhilfsmittels nach dem Coatingschritt kann die Fließeigenschaften des Produktes verbessern. Typische Fließhilfsmittel sind Kieselsäuren, z.B. die Sipemat-Produkte der Fa. Degussa oder die Tixosil-Produkte der Fa. Rhodia, Talkum, Stearate und Tricalciumphosphat oder Salze wie Magnesiumsulfat, Natriumsulfat oder Calciumcarbonat. Die Fließhilfsmittel werden bezogen auf das Gesamtgewicht des Produktes in einer Menge von 0,005 Gew.-% bis 5 Gew.-% dem beschichteten Produkt zugegeben. Bevorzugte Gehalte sind 0,1 Gew.-% bis 3 Gew.-% und besonders bevorzugt sind 0,2 Gew.-% bis 1,5 Gew.-%.

Ein weiterer Gegenstand der Erfindung betrifft Futtermittelzusammensetzungen und insbesondere pelletierte Futtermittelzusammensetzungen, welche neben üblichen Bestandteilen wenigstens einen Futtermittelzusatz gemäß obiger Definition als Beimischung enthalten.

Schließlich betrifft die Erfindung auch die Verwendung eines Futtermittelzusatzes nach obiger Definition zur Herstellung von Futtermittelzusammensetzungen, insbesondere von hydrothermisch behandelten und speziell von pelletierten Futtermittelzusammensetzungen.

Zur Herstellung der Futtermittelzusammensetzungen werden die erfindungsgemäß hergestellten beschichteten Enzymgranulate mit üblichem Tierfutter (wie z. B. Schweinemastfutter, Ferkelfutter, Sauenfutter, Broilerfutter und Putenfutter) vermischt. Der Enzymgranulatanteil wird so gewählt, dass der Enzymgehalt z. B. im Bereich von 10 bis 1000 ppm liegt. Anschließend wird das Futter mit Hilfe einer geeigneten Pelletpresse pelletiert. Dazu wird das Futtergemisch üblicherweise durch Dampfeinleitung konditioniert und anschließend durch eine Matrize gepresst. Je nach Matrize können so Pellets von etwa 2 bis 8 mm Durchmesser hergestellt werden. Die höchste Prozesstemperatur tritt dabei beim Konditionieren oder beim Pressen des Gemisches durch die Matrize auf. Hier können Temperaturen im Bereich von etwa 60 bis 100°C erreicht werden.

### Vergleichsbeispiel V1:

a) In einem wässrigen Phytasekonzentrat mit einem Trockenmassegehalt von etwa 25 bis 35 Gew.-%, einem pH-Wert im Bereich von 3,7-3,9 und einer Aktivität von 26000 bis 36000 FTU/g löste man bei 4-10°C 1 Gew.-% Zinksulfat-Hexahydrat, bezogen auf das Konzentrat.
b) In einem Mischer mit Choppermesser legte man 900 g Maisstärke vor, homogenisierte und gab hierzu langsam bei Temperaturen von 10 bis 30°C unter Homogenisieren gleichzeitig 380 g des Zinksulfat-haltigen Phytasekonzentrats und 140 g einer 10 gew.-%igen Lösung von Polyvinylalkohol (Hydrolysierungsgrad: 87-89 %). Man homogenisierte unter Kühlen des Mischers weitere 5 min bei Temperaturen im Bereich von 10 bis 50°C, überführte dann den so erhaltenen Teig in einen Dome-Extruder und extrudierte den Teig bei Temperaturen im Bereich von 30 bis 50°C durch eine Matrize mit einem Lochdurchmesser von 0,7 mm zu 5 cm langen Strängen.
c) Das so erhaltene Extrudat wurde in eine Rundungsmaschine (Typ P50, Firma Glatt) 5 min bei 350 min⁻¹ (Drehzahl des rotierenden Tellers) gerundet und anschließend in einem Wirbelschichttrockner bei einer Temperatur von bis zu 40°C (Produkttemperatur) auf eine Restfeuchte von etwa 6 Gew.-% getrocknet.
   Das so erhaltene Rohgranulat wies eine Aktivität von ca. 14200 FTU/g auf. Die Granulate hatten eine Korngröße von maximal 1300 µm und eine mittlere Partikelgröße von 650 µm (Siebanalyse).
d) Für die anschließende Beschichtung wurde das Rohgranulat in einem Laborwirbelbett Aeromat Typ MP-1 der Fa. Niro-Aeromatic vorgelegt. Als Vorlagegefäß wurden ein Kunststoffkonus mit einem Anströmboden-Durchmesser von 110 mm und ein Lochboden mit 12 % freier Fläche eingesetzt. Bei dem Beschichtungsmittel handelte es sich um ein handelsübliches Triglycerid auf Basis gesättigter C₁₆/C₁₈-Fettsäuren (Schmelzpunkt 57-61 °C, Iodzahl 0,35, Verseifungszahl 192).

Das im Wirbelbett vorgelegte Rohgranulat (700 g) wurde unter Wirbeln mit einer Luftmenge von 50 m³/h auf 45 °C Produkttemperatur erwärmt. 124 g des Triglycerids wurden im Becherglas bei 85 °C aufgeschmolzen und bei 1 bar Sprühdruck mit beheiztem Sprühgas von 80 bis 90 °C durch Unterdruckeinsaugung mittels einer Zweistoffdüse (1 mm) im Bottomsprayverfahren auf das Rohgranulat aufgesprüht. Während des Sprühens wurde das Coatingmaterial und die Einsaugleitung auf 80 bis 90 °C beheizt, um einen feinen Sprühnebel zu erhalten, damit sich eine gleichmäßige Coatingschicht um die Partikel bildete und diese geschlossen umhüllte. Während des Sprühprozesses wurde die Luftmenge auf 60 m³/h erhöht, um die Wirbelschichthöhe zu halten. Die Sprühdauer betrug 15 min, wobei die Produkttemperatur 45 bis 48 °C und die Zulufttemperatur ca. 45 °C betrug. Anschließend wurde das Produkt unter Wirbeln bei 50 m³/h Zuluft auf 30 °C abgekühlt.

Man erhielt ein Produkt mit folgenden Kenndaten:

| Zusammensetzung: | |
|---|---|
| Maisstärke | 68,0 Gew.-% |
| Phytase (Trockenmasse) | 12,0 Gew.-% |
| Polyvinylalkohol: | 1,1 Gew.-% |
| Zinksulfat (ZnSO₄): | 0,4 Gew.-% |
| Triglycerid: | 15,0 Gew.-% |
| Restfeuchte: | 3,5 Gew.-% |
| | |
| Phytase-Aktivität: | ca. 11800 FTU/g |
| Aussehen (Mikroskop): | Partikel mit glatter Oberfläche |

### Beispiel 1:

a) In einem wässrigen Phytasekonzentrat mit einem Trockenmassegehalt von etwa 25-35 Gew.-%, einem pH-Wert im Bereich von 3,7-3,9 und einer Aktivität von 26000-36000 FTU/g löste man bei 4-10°C 1 Gew.-% Zinksulfat-Hexahydrat, bezogen auf das Konzentrat. Anschließend stellte man durch Zugabe von 5 Gew.-%, bezogen auf das Phytasekonzentrat, einer 5 gew.-%igen wässrigen Ammoniaklösung einen pH Wert von 5 ein.
b)+c) Unter Verwendung des in a) hergestellten, neutralisierten Phytasekonzentrats stellte man gemäß der Vorschrift aus Vergleichsbeispiel 1, Schritte b) und c) ein gerundetes Rohgranulat her.
   Das so erhaltene Rohgranulat wies eine Aktivität von ca. 13300FTU/g auf. Die Granulate hatten eine Korngröße von maximal 1300 µm und eine mittlere Partikelgröße von 645 µm (Siebanalyse).
d) Das so erhaltene Rohgranulat wurde anschließend in einem Laborwirbelbett Aeromat Typ MP-1 der Fa. Niro-Aeromatic gemäß der Vorschrift aus Vergleichsbeispiel V1, Schritt d) beschichtet. Bei dem Beschichtungsmittel handelte es sich um ein handelsübliches Triglycerid auf Basis gesättigter C₁₆/C₁₈-Fettsäuren (Schmelzpunkt 57-61 °C, Iodzahl 0,35, Verseifungszahl 192).

Man erhielt ein Produkt mit folgenden Kenndaten:

| Zusammensetzung: | |
|---|---|
| Maisstärke | 68,0 Gew.-% |
| Phytase (Trockenmasse) | 12,0 Gew.-% |
| Polyvinylalkohol: | 1,1 Gew.-% |
| Zinksulfat (ZnSO₄): | 0,4 Gew.-% |
| Triglycerid: | 15,0 Gew.-% |
| Restfeuchte: | 3,5 Gew.-% |
| | |
| Phytase-Aktivität: | ca. 11050 FTU/g |
| Aussehen (Mikroskop): | Partikel mit glatter Oberfläche |

### Beispiel 2:

a) In einem wässrigen Phytasekonzentrat mit einem Trockenmassegehalt von etwa 25-35 Gew.-%, einem pH-Wert im Bereich von 3,7-3,9 und einer Aktivität von 26000-36000 FTU/g löste man bei 4-10°C 1 Gew.-% Zinksulfat-Hexahydrat, bezogen auf das Konzentrat. Man erwärmte das Konzentrat auf 30°C und gab hierzu 1,1 gew.-% Methylcellulose (Molekulargewicht von 70000 - 120000 g/mol, Viskosität: 4600 cps bei 2 Gew.-% in Wasser und 20 °C, Substitutionsgrad 1,6-1,9) und rührte, bis sich die Methylcellulose vollständig gelöst hatte. Anschließend stellte man durch Zugabe von 5 Gew.-%, bezogen auf das Phytasekonzentrat, einer 5 gew.-%igen wässrigen Ammoniaklösung einen pH Wert von 5 ein.
b) In einem Mischer mit Choppermesser legte man 890 g Maisstärke vor, homogenisierte und gab hierzu langsam bei Temperaturen von 10 bis 30°C unter Homogenisieren 433 g des Phytasekonzentrats aus Schritt a). Man homogenisierte unter Kühlen des Mischers weitere 5 min bei Temperaturen im Bereich von 10 bis 50°C, überführte dann den so erhaltenen Teig in einen Dome-Extruder und extrudierte den Teig bei Temperaturen im Bereich von 30 bis 50°C durch eine Matrize mit einem Lochdurchmesser von 0,7 mm zu 5 cm langen Strängen.
c) Das so erhaltene Extrudat wurde in eine Rundungsmaschine (Typ P50, Firma Glatt) 5 min bei 350 min⁻¹ (Drehzahl des Tellers) gerundet und anschließend in einem Wirbelschichttrockner bei einer Temperatur von 40 °C (Produkttemperatur) auf eine Restfeuchte von etwa 6 Gew.-% getrocknet.
   Das so erhaltene Rohgranulat wies eine Aktivität von ca. 12700 FTU/g auf. Die Granulate hatten eine Korngröße von maximal 1400 µm und eine mittlere Partikelgröße von 662 µm (Siebanalyse).
d) Das so erhaltene Rohgranulat wurde anschließend in einem Laborwirbelbett Aeromat Typ MP-1 der Fa. Niro-Aeromatic gemäß der Vorschrift aus Vergleichsbeispiel V1, Schritt b) beschichtet. Bei dem Beschichtungsmittel handelte es sich um ein handelsübliches Triglycerid auf Basis gesättigter C₁₆/C₁₈-Fettsäuren (Schmelzpunkt 57-61 °C, Iodzahl 0,35, Verseifungszahl 192).

Man erhielt ein Produkt mit folgenden Kenndaten:

| Zusammensetzung: | |
|---|---|
| Maisstärke | 68,6 Gew.-% |
| Phytase (Trockenmasse) | 12,0 Gew.-% |
| Methylcellulose: | 0,5 Gew.-% |
| Zinksulfat (ZnSO₄): | 0,4 Gew.-% |
| Triglycerid: | 15,0 Gew.-% |
| Restfeuchte: | 3,5 Gew.-% |
| | |
| Phytase-Aktivität: | ca. 10450 FTU/g |
| Aussehen (Mikroskop): | Partikel mit glatter Oberfläche |

### Vergleichsbeispiel V2:

Die Herstellung erfolgte analog zu Beispiel 2, wobei man im Unterschied zu der dort angegebenen Vorschrift keine wässrige Ammoniaklösung zugab.

Man erhielt ein Produkt mit folgenden Kenndaten:

| Zusammensetzung: | |
|---|---|
| Maisstärke | 68,6 Gew.-% |
| Phytase (Trockenmasse) | 12,0 Gew.-% |
| Methylcellulose: | 0,5 Gew.-%, |
| Zinksulfat (ZnSO₄): | 0,4 Gew.-% |
| Triglycerid: | 15,0 Gew.-% |
| Restfeuchte: . | 3,5 Gew.-% |
| | |
| Phytase-Aktivität: | ca. 10760 FTU/g |
| Aussehen (Mikroskop): | Partikel mit glatter Oberfläche |

### Versuch 1: Bestimmung der Pelletierstabilität

Zur Beurteilung der Pelletierstabilität der oben beschriebenen Enzymgranulate wurde eine Standardpelletierung festgelegt. Dazu wird zur Verbesserung der analytischen Gehaltsbestimmungen die Dosierung im Futter erhöht. Die Pelletierung wird so durchgeführt, dass eine Konditioniertemperatur von 80 bis 85 °C erreicht wird. Es werden repräsentative Proben des Futters vor und nach dem Pelletieren gewonnen. In diesen Proben wird die Enzymaktivität bestimmt. Gegebenenfalls nach Korrektur um den Gehalt an Enzym, der nativ vorhanden ist, können die durch Pelletierung bedingten Verluste bzw. die relative Restaktivität (=Retention) berechnet werden.

Die Analysenmethode für Phytase ist in verschiedenen Veröffentlichungen beschrieben: Simple and Rapid Determination of Phytase Activity, Engelen et al., Journal of AOAC International, Vol. 77, No. 3, 1994; Phytase Activity, General Tests and Assays, Food Chemicals Codex (FCC), IV, 1996, p. 808-810; Bestimmung der Phytaseaktivität in Enzymstandardmaterialien und Enzympräparaten VDLUFA-Methodenbuch, Band III, 4. Erg. 1997; oder Bestimmung der Phytaseaktivität in Futtermitteln und Vormischungen VDLUFA-Methodenbuch, Band III, 4. Erg. 1997.

Als Futter wurde ein praxisübliches Broilerfutter mit folgender Zusammensetzung eingesetzt:

| | |
|---|---|
| Mais | 45,5 % |
| Sojaextraktionsschrot | 27,0 % |
| Vollfette Sojabohnen | 10,0 % |
| Erbsen | 5,0 % |
| Tapioka | 4,7 % |
| Sojaöl | 3,5 % |
| Kalk | 1,35 % |
| Monocalciumphosphat | 1,30 % |
| Viehsalz | 0,35 % |
| Vitamin/Spurenelementpremix | 1,00 % |
| D,L-Methionin | 0,25 % |
| L-Lysin-HCl | 0,05 % |
| | |
| | 100 % |

Die in obigen Beispielen hergestellten gecoateten Granulate wurden mit obigem Stan-dardfutter vermischt (Anteil 500 ppm), pelletiert und die gewonnenen Proben analysiert. Die relative Verbesserung der Retention der Enzymaktivität gegenüber dem Granulat aus dem Vergleichsbeispiel V1 wurde wie folgt berechnet: Verhältnis Retention der Enzymaktivität des verbesserten Granulats zu Retention der Enzymaktivität des Granulats aus dem Vergleichsbeispiel V1. Die Ergebnisse sind in folgender Tabelle 1 zusammengefasst.

**Tabelle 1: Erzielte Pelletierstabilität**

| Nr. | Beschreibung des Granulats (Coating, Bindemittel, pH) | Relative Pelletierstabilität [%] |
|---|---|---|
| Vergl.-Bsp. V1 | 15% Fett, 1,1% PVA, pH 3,9 | 100 |
| Bsp. 1 | 15% Fett, 1,1% PVA, pH 5 | 120 |
| Bsp. 2 | 15% Fett, 0,5% MC, pH 5 | 123 |
| Vergl.-Bsp. V2 | 15% Fett, 0,5% MC, pH 3,9 | 112 |

| | | |
|---|---|---|
| PVA = Polyvinylalkohol MC = Methylcellulose | | |

### Versuch 2:

Zur Beurteilung des pH-Wertes des Granulats aus Vergleichsbeispiel V1 wurde in einem 250 ml Erlenmeierkolben 200ml voll entsalztes Wasser vorgelegt und mit einem Magnetführer des Typs IKA RCT basic auf Stufe 7-8 bei 25 °C gerührt. Während des Rührens wurden langsam 5 g von dem in einer Reibschale zerkleinerten Granulat aus Vergleichsbeispiel V1 zugegeben und dabei der pH-Wert gemessen. Das Granulat schwamm zunächst größtenteils ungelöst oben auf. Nach ca. 5 Minuten fiel der pH-Wert zunächst auf 6,2 und das Granulat war größtenteils gelöst. Nach 13 Min war das Granulat bis auf Feinanteile fast vollständig gelöst und der pH-Wert lag zwischen 4,28 - 4,35. Es entstand eine trübe milchfarbige Suspension. Nach 25 Min wurde der Versuch gestoppt, da sich keine Änderungen im pH-Wert mehr zeigten.

### Versuch 3:

Zur Beurteilung des pH-Wertes des Granulats aus Beispiel 1 wurde in einem 250 ml Erlenmeierkolben 200 ml voll entsalztes Wasser vorgelegt und mit einem Magnetführer des Typs IKA RCT basic auf Stufe 7-8 bei 25 °C gerührt. Während des Rührens wurden langsam 5 g von dem in einer Reibschale zerkleinerten Granulat aus Vergleichsbeispiel V1 zugegeben und dabei der pH-Wert gemessen. Das Granulat schwamm zunächst größtenteils ungelöst oben auf. Nach ca. 5 Minuten fiel der pH-Wert auf 6,5 und das Granulat war größtenteils gelöst. Nach ca. 15 Min war das Granulat bis auf Feinanteile fast vollständig gelöst und der pH-Wert lag zwischen 5,6 - 5,7. Es entstand eine trübe milchfarbige Suspension. Nach 30 Min wurde der Versuch gestoppt, da sich keine Änderungen im pH-Wert mehr zeigten.

## Patentansprüche

1. Phytasehaltiges Enzymgranulat für Futtermittel, dessen Teilchen
A) einen Kern, welcher wenigstens eine Phytase und wenigstens ein für Futtermittel geeignetes festes Trägermaterial umfasst, und
b) eine auf dem Kern angeordnete Beschichtung aufweisen, die zu wenigstens 90 Gew.-% aus in Wasser unlöslichen hydrophoben Substanzen besteht, wobei der Anteil an Kohlenstoff und Wasserstoff wenigstens 80 Gew.-% der hydrophoben Substanzen ausmacht,
wobei die Kerne der Teilchen oder das gesamte Teilchen beim Suspendieren oder Lösen in voll entsalztem Wasser bei 25°C einen pH-Wert im Bereich von 4,5 bis 6,5 ergeben.

2. Enzymgranulat nach Anspruch 1, worin der Kern zur Einstellung des pH-Wertes wenigstens einen Puffer umfasst.

3. Enzymgranulat nach Anspruch 1 oder 2, wobei die hydrophobe Substanz unter einem oder mehreren Triglyceriden ausgewählt ist.

4. Enzymgranulat nach einem der vorhergehenden Ansprüche, wobei das Gewichtsverhältnis von Kern zu Beschichtung im Bereich von 70:30 bis 99:1 liegt.

5. Enzymgranulat nach einem der vorhergehenden Ansprüche, dessen Teilchen eine mittlere Teilchengröße im Bereich von 100 bis 2000 µm aufweisen.

6. Enzymgranulat nach einem der vorhergehenden Ansprüche, wobei der Enzymkern unter Verwendung eines wässrigen Enzymkonzentrats, das bei 25°C einen pH-Wert im Bereich von 4,5 bis 6,5 aufweist, hergestellt ist.

7. Enzymgranulat nach einem der vorhergehenden Ansprüche, wobei das Trägermaterial wenigstens ein in Wasser unlösliches polymeres Kohlenhydrat umfasst.

8. Enzymgranulat nach einem der vorhergehenden Ansprüche, wobei der Enzymkern
i) 50 bis 96,9 Gew.-% wenigstens eines für Futtermittel geeigneten festen Trägermaterials,
ii) 0,1 bis 20 Gew.-%, wenigstens eines in Wasser löslichen, polymeren Bindemittels,
iii) 3 bis 49,9 Gew.-% wenigstens einer Phytase oder eines Enzymgemischs, das wenigstens eine Phytase umfasst, und
iv) gegebenenfalls Wasser
enthält, wobei die Gewichtsanteile von i), ii) und iii) jeweils auf die nichtwässrigen Bestandteile des Kerns bezogen sind.

9. Enzymgranulat nach Anspruch 8, wobei das in Wasser lösliche, polymere Bindemittel ausgewählt ist unter Polyvinylalkohol und wasserlöslichen Polysacchariden.

10. Enzymgranulat nach Anspruch 9, wobei das in Wasser lösliche, polymere Bindemittel einen neutralen Celluloseether, insbesondere Methylcellulose, umfasst.

11. Enzymgranulat nach einem der vorhergehenden Ansprüche, wobei der Kern zusätzlich ein das Enzym stabilisierendes Salz in einer Menge von 0,1 bis 10 Gew.-%, bezogen auf das Gesamtgewicht aller nichtwässrigen Bestandteile des Kerns, enthält.

12. Enzymgranulat nach Anspruch 11, wobei das Salz ausgewählt ist unter Zinksulfat und Magnesiumsulfat.

13. Verfahren zur Herstellung von festen, phytasehaltigen Enzymgranulaten nach einem der Ansprüche 1 bis 12, umfassend die folgenden Schritte:
a) Bereitstellung eines unbeschichteten, phytasehaltigen Rohgranulats, das wenigstens eine Phytase und wenigstens ein für Futtermittel geeignetes festes Trägermaterial umfasst und das beim Suspendieren oder Lösen in voll entsalztem Wasser bei 25°C einen pH-Wert im Bereich von 4,5 bis 6,5 ergibt, und
b) Beschichten des Rohgranulats.

14. Verfahren nach Anspruch 13, wobei man das phytasehaltige Rohgranulat unter Verwendung eines phytasehaltigen, wässrigen Enzymkonzentrats herstellt, dessen pH-Wert in voll entsalztem Wasser bei 25°C im Bereich von 4,5 bis 6,5 liegt.

15. Verfahren nach Anspruch 14, wobei man in Schritt a) ein Gemisch, umfassend den futtermitteltauglichen Träger und das phytasehaltige, wässrige Enzymkonzentrat, durch Extrusion, Mischergranulation, Wirbelschichtgranulation, Telleragglomeration, Sprühagglomeration, Sprühgranulation oder Kompaktierung zu einem Rohgranulat verarbeitet.

16. Verfahren nach Anspruch 15, wobei Schritt a) die Extrusion eines enzymhaltigen Teigs umfasst, welcher neben Wasser
i) 50 bis 96,9 Gew.-% wenigstens eines für Futtermittel geeigneten festen Trägermaterials,
ii) 0,1 bis 20 Gew.-% wenigstens eines in Wasser löslichen, neutralen Cellulosederivats,
iii) 3 bis 49,1 Gew.-% wenigstens eines Enzyms, enthält, wobei die Gewichtsanteile von i), ii) und iii) jeweils auf die nichtwässrigen Bestandteile des Teigs bezogen sind.

17. Verfahren nach einem der Ansprüche 13 bis 16, wobei man in Schritt b) das für die Herstellung der Beschichtung eingesetzte Material in Form seiner Schmelze einsetzt.

18. Verfahren nach einem der Ansprüche 13 bis 17, wobei man in Schritt a) das Rohgranulat vor dem Beschichten einer Spheronisierung unterwirft und anschließend auf einen Restwassergehalt von nicht mehr als 15 Gew.-%, bezogen auf das Gesamtgewicht des Rohgranulats, trocknet.

19. Phytasehaltiges Rohgranulat, umfassend wenigstens eine Phytase und wenigstens ein für Futtermittel geeignetes festes Trägermaterial, das beim Suspendieren oder Lösen in voll entsalztem Wasser bei 25°C einen pH-Wert im Bereich von 4,5 bis 6,5 ergibt.

20. Verwendung eines phytasehaltigen Enzymgranulats nach einem der Ansprüche 1 bis 12 in Futtermitteln.

21. Futtermittel, enthaltend wenigstens ein phytasehaltiges Enzymgranulat nach einem der Ansprüche 1 bis 12 und übliche Futtermittelbestandteile.

22. Futtermittel nach Anspruch 21 in Form eines pelletierten Futtermittels.

## Claims

1. Phytase-comprising enzyme granules for feeds, the particles of which have
A) a core which comprises at least one phytase and at least one solid carrier material suitable for feeds, and
b) a coating arranged on the core, at least 90% by weight of which coating comprises water-insoluble hydrophobic substances, the proportion of carbon and hydrogen making up at least 80% by weight of the hydrophobic substances,
the cores of the particles or the entire particle, on suspension or dissolution in demineralized water at 25°C giving a pH in the range from 4.5 to 6.5.

2. The enzyme granules according to claim 1, wherein the core comprises at least one buffer to set the pH.

3. The enzyme granules according to claim 1 or 2, the hydrophobic substance being selected from one or more triglycerides.

4. The enzyme granules according to one of the preceding claims, the weight ratio of core to coating being in the range from 70:30 to 99:1.

5. The enzyme granules according to one of the preceding claims, the particles of which have a mean particle size in the range from 100 to 2000 µm.

6. The enzyme granules according to one of the preceding claims, the enzyme core being produced using an aqueous enzyme concentrate which, at 25°C, has a pH in the range from 4.5 to 6.5.

7. The enzyme granules according to one of the preceding claims, the carrier material comprising at least one water-insoluble polymeric carbohydrate.

8. The enzyme granules according to one of the preceding claims, the enzyme core comprising
i) 50 to 96.9% by weight of at least one solid carrier material suitable for feeds,
ii) 0.1 to 20% by weight of at least one water-soluble polymeric binder,
iii) 3 to 49.9% by weight of at least one phytase or an enzyme mixture which comprises at least one phytase, and
iv) if appropriate water,
the weight fractions of i), ii) and iii) each being based on the nonaqueous components of the core.

9. The enzyme granules according to claim 8, the water-soluble polymeric binder being selected from polyvinyl alcohol and water-soluble polysaccharides.

10. The enzyme granules according to claim 9, the water-soluble polymeric binder comprising a neutral cellulose ether, in particular methylcellulose.

11. The enzyme granules according to one of the preceding claims, the core additionally comprising a salt stabilizing the enzyme in an amount of 0.1 to 10% by weight, based on the total weight of all nonaqueous components of the core.

12. The enzyme granules according to claim 11, the salt being selected from zinc sulfate and magnesium sulfate.

13. A method for producing solid phytase-comprising enzyme granules according to one of claims 1 to 12, comprising the following steps:
a) providing uncoated, phytase-comprising raw granules which comprise at least one phytase and at least one solid carrier material suitable for feeds and which, on suspension or dissolution in demineralized water at 25°C, give a pH in the range from 4.5 to 6.5, and
b) coating the raw granules.

14. The method according to claim 13, the phytase-comprising raw granules being produced using a Phytase-comprising aqueous enzyme concentrate, the pH of which in demineralized water at 25°C being in the range from 4.5 to 6.5.

15. The method according to claim 14, in step a), a mixture comprising the feed-compatible carrier and the phytase-comprising aqueous enzyme concentrate being processed to form raw granules by extrusion, mixer-granulation, fluidized-bed granulation, disk agglomeration, spray agglomeration, spray granulation or compacting.

16. The method according to claim 15, step a) comprising the extrusion of an enzyme-comprising dough which, in addition to water
i) comprises 50 to 96.9% by weight of at least one solid carrier material suitable for feeds,
ii) 0.1 to 20% by weight of at least one water-soluble neutral cellulose derivative,
iii) 3 to 49.1% by weight of at least one enzyme, the weight fractions of i), ii) and iii) in each case being based on the nonaqueous components of the dough.

17. The method according to one of claims 13 to 16, in step b), the material used for producing the coating being used in the form of its melt.

18. The method according to one of claims 13 to 17, in step a), the raw granules, before coating, being subjected to spheronization and subsequently dried to a residual water content of no greater than 15% by weight, based on the total weight of the raw granules.

19. Phytase-comprising raw granules comprising at least one phytase and at least one solid carrier material suitable for feeds which, on suspension or dissolution in demineralized water at 25°C, gives a pH in the range from 4.5 to 6.5.

20. The use of phytase-comprising enzyme granules according to one of claims 1 to 12 in feeds.

21. A feed comprising at least one phytase-comprising enzyme granule according to one of claims 1 to 12 and customary feed components.

22. The feed according to claim 21 in the form of a pelleted feed.

## Revendications

1. Granulat enzymatique contenant une/des phytase(s) destiné aux aliments pour animaux, dont les particules présentent
A) un noyau qui comprend au moins une phytase et au moins un matériau support solide approprié pour des aliments pour animaux, et
b) un revêtement disposé sur le noyau, qui est constitué, à raison d'au moins 90% en poids, de substances hydrophobes insolubles dans l'eau, la proportion de carbone et d'hydrogène représentant au moins 80% en poids des substances hydrophobes,
les noyaux des particules ou les particules dans leur totalité résultant, lors de la mise en suspension ou de la dissolution dans de l'eau déminéralisée à 25°C, en un pH dans la plage de 4,5 à 6,5.

2. Granulat enzymatique selon la revendication 1, le noyau contenant au moins un tampon pour le réglage du pH.

3. Granulat enzymatique selon la revendication 1 ou 2, la substance hydrophobe étant choisie parmi un ou plusieurs triglycérides.

4. Granulat enzymatique selon l'une quelconque des revendications précédentes, le rapport pondéral de noyau à revêtement étant situé dans la plage de 70:30 à 99:1.

5. Granulat enzymatique selon l'une quelconque des revendications précédentes, dont les particules présentent une grosseur moyenne de particule dans la plage de 100 à 2000 µm.

6. Granulat enzymatique selon l'une quelconque des revendications précédentes, le noyau enzymatique étant préparé en utilisant un concentrat enzymatique aqueux, qui présente à 25°C un pH dans la plage de 4,5 à 6,5.

7. Granulat enzymatique selon l'une quelconque des revendications précédentes, le matériau support comprenant au moins un hydrate de carbone polymère insoluble dans l'eau.

8. Granulat enzymatique selon l'une quelconque des revendications précédentes, le noyau enzymatique contenant
i) 50 à 96,9% en poids d'au moins un matériau support solide approprié pour des aliments pour animaux,
ii) 0,1 à 20% en poids d'au moins un liant polymère soluble dans l'eau.
iii) 3 à 49,9% en poids d'au moins une phytase ou d'un mélange enzymatique qui comprend au moins une phytase, et
iv) le cas échéant de l'eau
les proportions pondérales de i), ii) et iii) se rapportant à chaque fois aux constituants non aqueux du noyau.

9. Granulat enzymatique selon la revendication 8, le liant polymère, soluble dans l'eau étant choisi parmi le poly(alcool vinylique) et les polysaccharides solubles dans l'eau.

10. Granulat enzymatique selon la revendication 9, le liant polymère, soluble dans l'eau comprenant un éther de cellulose neutre, en particulier la méthylcellulose.

11. Granulat enzymatique selon l'une quelconque des revendications précédentes, le noyau contenant en plus un sel stabilisant l'enzyme en une quantité de 0,1 à 10% en poids, par rapport au poids total de tous les constituants non aqueux du noyau.

12. Granulat enzymatique selon la revendication 11, le sel étant choisi parmi le sulfate de zinc et le sulfate de magnésium.

13. Procédé pour la préparation de granulats enzymatiques solides, contenant une/des phytase(s) selon l'une quelconque des revendications 1 à 12, comprenant les étapes suivantes :
a) préparation d'un granulat brut non revêtu, contenant une/des phytase(s), qui comprend au moins une phytase et au moins un matériau support solide, approprié pour des aliments pour animaux et qui résulte, lors de la mise en suspension ou de la dissolution dans de l'eau déminéralisée à 25°C, en un pH dans la plage de 4,5 à 6,5, et
b) revêtement du granulat brut.

14. Procédé selon la revendication 13, le granulat brut contenant une/des phytase(s) étant préparé en utilisant un concentrat enzymatique aqueux contenant une/des phytase(s), dont le pH dans l'eau déminéralisée à 25°C se situe dans la plage de 4,5 à 6,5.

15. Procédé selon la revendication 14, dans lequel on transforme, dans l'étape a), un mélange comprenant un support approprié pour des aliments pour animaux et le concentrat enzymatique aqueux contenant une/des phytase(s), par extrusion, granulation dans un mélangeur, granulation en couche tourbillonnante, agglomération dans une assiette, agglomération par pulvérisation, granulation par pulvérisation ou compactage en un granulat brut.

16. Procédé selon la revendication 15, l'étape a) comprenant l'extrusion d'une pâte contenant une/des enzyme(s), qui contient, outre de l'eau
i) 50 à 96,9% en poids d'au moins un matériau support solide approprié pour des aliments pour animaux,
ii) 0,1 à 20% en poids d'au moins un dérivé de cellulose neutre, soluble dans l'eau,
iii) 3 à 49,1% en poids d'au moins une enzyme, les proportions pondérales de i), ii) et iii) se rapportant à chaque fois aux constituants non aqueux de la pâte.

17. Procédé selon l'une quelconque des revendications 13 à 16, le matériau utilisé dans l'étape b) pour la réalisation du revêtement étant utilisé sous forme de sa masse fondue.

18. Procédé selon l'une quelconque des revendications 13 à 17, le granulat brut étant soumis, dans l'étape a), avant le revêtement, à une sphéronisation, puis séché à une teneur résiduelle en eau qui n'est pas supérieure à 15% en poids par rapport au poids total du granulat brut.

19. Granulat brut contenant une/des phytase(s)s, qui comprend au moins une phytase et au moins un matériau support solide, approprié pour des aliments pour animaux et qui résulte, lors de la mise en suspension ou de la dissolution dans de l'eau déminéralisée à 25°C, en un pH dans la plage de 4,5 à 6,5.

20. Utilisation d'un granulat enzymatique contenant une/des phytase(s) selon l'une quelconque des revendications 1 à 12 dans des aliments pour animaux.

21. Aliment pour animaux, contenant au moins un granulat contenant une/des phytase(s) selon l'une quelconque des revendications 1 à 12 et des constituants usuels pour aliments pour animaux.

22. Aliment pour animaux selon la revendication 21 sous forme d'un aliment pour animaux pelletisé.
